# EUROPÄISCHE PATENTSCHRIFT

(11) **EP 2 266 774 B1**
(45) Veröffentlichungstag und Bekanntmachung des Hinweises auf die Patenterteilung: **27.11.2013**
(21) Anmeldenummer: 10181795.5
(22) Anmeldetag: 10.02.2005
(51) Int. Cl.: B29C 45/04, B29C 45/32, B29C 45/16

(54) **Vorrichtung zum Spritzgiessen von Kunststoffteilen**
Device for injection moulding plastic parts
Dispositif pour mouler par injection des pieces en plastique

(30) Priorität: 10.02.2004 CH 1912004; 30.09.2004 CH 15982004; 19.10.2004 CH 17172004
(43) Veröffentlichungstag der Anmeldung: 29.12.2010
(62) Teilanmeldung aus: 05708001.2
(73) Patentinhaber: Foboha GmbH Formenbau, 77716 Haslach (DE)
(72) Erfinder: Armbruster, Rainer, 77709, Wolfach (DE)
(74) Vertreter: Rentsch Partner AG

(56) Entgegenhaltungen:
- WO-A-02/36319
- US-A- 6 139 305

## Beschreibung

Die Erfindung betrifft eine Vorrichtung und ein Verfahren zum Herstellen von Kunststoffteilen, insbesondere aus mehreren Einzelteilen bestehenden Kunststoffteilen gemäss dem Oberbegriff der unabhängigen Patentansprüche.

Aus dem Stand der Technik sind Vorrichtungen bekannt, die zur Herstellung von Teilen geeignet sind, die aus einem oder mehreren Kunststoffkomponenten bestehen.

Das Europäische Patent EP1155802 derselben Anmelderin zeigt eine Spritzgiessvorrichtung mit zwei Produktionsebenen (Trennebenen) mit einem Wendesystem, das zwischen einem feststehenden und einem beweglichen Formteil angeordnet ist und zur Halterung eines mittleren Formteils dient. Das mittlere Formteil ist durch eine untere und eine obere Traverse mittels Haltemitteln gehalten und um eine vertikale Achse beweglich angeordnet. Die Traversen sind an den Holmen einer Spritzgiessmaschine geführt. Um das Gewicht des mittleren Formteils zu kompensieren ist die untere Traverse, falls erforderlich, auf dem Maschinenbett der Spritzgiessmaschine abgestützt. Damit das mittlere Formteil ausgewechselt werden kann, sind die Haltemittel relativ zueinander verschiebbar angeordnet. In einer ersten Produktionsebene wird eine erste Materialkomponente in eine Kavität gespritzt, so dass ein erstes Teil entsteht. Das Teil aus der ersten Materialkomponente bleibt beim Öffnen der Form am mittleren Formteil haften und wird mit diesem durch Drehen des mittleren Formteils in die zweite Produktionsebene gebracht, wo es nach dem Schliessen der Form mit einer zweiten Materialkomponente wirkverbunden wird. Das mittlere Formteil ist über Haltevorrichtungen an den Holmen einer Spritzgiessmaschine abgestützt.

EP0895848, von der Ferromatik Milacron Maschinenbau GmbH, zeigt eine weitere Vorrichtung mit zwei Trennebenen. Zwischen einer feststehenden und einer beweglich angeordneten Formhälfte ist ein mittleres Formteil angeordnet das in einer unteren und einer oberen Traverse gelagert und auf einem Maschinenbett einer Spritzgiessvorrichtung abgestützt ist. Das Mittelteil ist um eine vertikale Achse um 180° drehbar angeordnet und weist nur auf zwei Seiten Kavitäten auf. Das Lager im Bereich der oberen Traversen kann geöffnet werden, damit das Mittelteil entnommen werden kann.

EP1119449 (fortan EP'449), von der Krauss Maffei Kunststofftechnik GmbH, zeigt eine Spritzgiessvorrichtung mit zwei Produktionsebenen, mit einer feststehenden und einer beweglichen Formhälfte. Zwischen den beiden Formhälften ist ein Formmittelteil angeordnet, das mittels einer im Maschinenbett einer Spritzgiessmaschine eingelassenen Führung einseitig gehalten und um eine Achse drehbar angeordnet ist. Die Spritzgiessmaschine ist dafür diesen besonderen Anforderungen gerecht angepasst. Die in EP'449 beschriebene Vorrichtung ist zur Herstellung von Teilen aus mehreren Kunststoffkomponenten geeignet.

In PCT/DK01/00699 (WO-A-02 36 319) (fortan PCT'699), von Jes Gram, wird das Grundkonzept für ein Verfahren beschrieben, bei dem in mindestens einer Trennebene ein Zusammensetzen von zwei identischen Teilen durch Verschweissen derselben miteinander, erfolgt. Die für die Umsetzung des Verfahrens vorgeschlagene Vorrichtung weist zwei je um eine Achse drehbar angeordnete Mittelteile auf, die mit der Spritzgiessform geöffnet und geschlossen werden. PCT' 699 offenbart eine Spritzgiessvorrichtung gemäß dem Oberbegriff des Anspruchs 1. PCT'699 beschreibt im Allgemeinen eine Vorrichtung zur Herstellung eines einzelnen Hohlkörpers indem eine erste Halbschale in einer ersten Spritzgiessebene und eine zweite Halbschale in einer zweiten Spritzgiessebene hergestellt und dann durch Drehen der Mittelteile bei gleichmässig geöffneter Form, d.h. beide Trennebenen werden symmetrisch geöffnet, um ihre Achsen um 180° und anschliessendes Schliessen der Spritzgiessform miteinander materialschlüssig verbunden werden. Die materialschlüssige Verbindung zwischen den beiden Halbschalen erfolgt durch Zusammenfügen des aufgeschmolzenen Grundmaterials infolge der Schliessbewegung der Form. Zum Aufschmelzen wird eine Wärmequelle vorgesehen, die seitlich neben der Vorrichtung platziert ist. Pro Zyklus entsteht ein einzelner Hohlkörper. Aus PCT'699 ist insbesondere nicht zu entnehmen wie die Mittelteile in der Spritzgiessform gelagert sein müssen, damit ein einwandfreies Funktionieren gewährleistet werden kann. Die in PCT'699 zur Durchführung des Verfahrens vorgeschlagene Vorrichtung gibt keine Antwort auf Fragen, welche zur Umsetzung des Verfahrens wesentlich sind. Aus PCT'699 kann ein Fachmann u. a. aufgrund der sehr schematischen, ungenauen Beschreibung, keinen Hinweis entnehmen, wie eine Vorrichtung zur erfolgreichen Durchführung des Verfahrens im Detail auszusehen hat.

US4744741 (fortan US'741), John B. Glover et al., zeigt eine Vorrichtung mit einer feststehenden ersten und einer gegenüber dieser beweglich angeordneten zweiten Formhälfte. Zwischen diesen beiden Formhälften sind ein erstes und ein zweites je um eine Achse drehbares Mittelteil angeordnet, die in der Mitte unmittelbar formschlüssig zusammenwirken und den inneren Teil einer Kavität bilden. Ein weiteres aus zwei Formhälften bestehendes Formteil ist in geschlossenem Zustand um die drehbaren Mittelteile angeordnet und bildet zeitweise einen äusseren, ringförmigen Teil einer Spritzgiessform. Im der Mitte wirken die beiden drehbaren Mittelteile unmittelbar entlang einer mittleren Trennebene zusammen. In einer ersten und einer dritten Trennebene werden simultan zwei erste Teile hergestellt. Anschliessend wir die Vorrichtung gleichmässig geöffnet und die beiden ersten Teile werden mittels der drehbaren Mittelteile mit einem zweiten Teil zusammengefügt, das durch den mittleren ringförmigen Formteil gehalten wird. Gemäss der Beschreibung befinden sich die beiden ersten Teile noch in teilplastischem Zustand wenn sie mit dem ersten Teil verbunden werden, so dass die ersten und der zweite Teil miteinander verkleben. Falls das Material nicht mehr genügend flüssig ist, ist eine externe Heizvorrichtung vorgesehen um das Material wieder aufzuschmelzen. Die in US'741 beschriebene Vorrichtung dient zur Herstellung von Rohrstutzen, respektive Rohrverbindungsstücken, welche über die Enden der zu verbindenden Rohre gestülpt werden und Dichtungen aufweisen, die in der selben Vorrichtung hergestellt und in der oben beschriebenen Art und Weise mittels den drehbaren Mittelteilen mit dem Aussenteil verbunden werden. Der genaue Aufbau der in US'741 beschriebenen Spritzgiessform, sowie deren Koordination geht aus dem Dokument nicht hervor. Aus der Beschreibung ist u. a. nicht zu entnehmen, welches die Anforderungen an eine Spritzgiessmaschine sind.

Ein wesentlicher Nachteil der aus dem Stand der Technik bekannten Vorrichtungen besteht darin, dass Teile durch das Schliessen der Form über die Hauptwerkzeugbewegung zusammengefügt werden. Dies führt zu einer geringen Präzision und einer Verlangsamung des Prozesses, da der Schliessmechanismus der Spritzgiessmaschine, der für die Schliessbewegung zuständig ist, nicht zur Montage geeignet ist. Ausserdem kann bei einer Vorrichtung mit einer Vielzahl von Kavitäten pro Schliessebene nicht individuell montiert werden.

Es ist Aufgabe der Erfindung ein Verfahren und eine Vorrichtung für die Herstellung von komplexen Teilen, insbesondere Montagespritzguss von mehrteiligen Produkten, zu zeigen, welche die Nachteile des Standes der Technik vermeiden.

Ein Ausgangspunkt der Erfindung beruht auf der Umsetzung eines Spritzgiessverfahrens bei dem zwei oder mehrere gleiche oder unterschiedliche Teile aus derselben oder unterschiedlichen Materialkomponenten miteinander direkt oder indirekt wirkverbunden werden. Bei einer bevorzugten Ausführungsform werden die einzelnen Teile vorzugsweise im Bereich einer ersten und einer zweiten Trennebene einer Spritzgiessvorrichtung mit mehreren Formhälften hergestellt und im Bereich einer dritten Trennebene derselben Spritzgiessvorrichtung, vorzugsweise unter Ausnützung der Schliesskraft, bzw. Schliessbewegung der Spritzgiessvorrichtung miteinander wirkverbunden. Es ist bei Bedarf vorgesehen, dass in der Regel während dem Wirkverbinden im Bereich der dritten Trennebene, in der ersten und in der zweiten Trennebene weitere Teile gespritzt werden.

Alternativ oder in Ergänzung erfolgt die Wirkverbindung von mindestens zwei Teilen durch ein separates Wirkverbindungsmittel, das vorzugsweise im Bereich von Kavitäten zumindest in eine der Formhälften/Formträger integriert ist und in der Regel bei geschlossener, d.h. wenn die Trennebenen der Spritzgiessvorrichtung geschlossen sind, oder bei schliessender Spritzgiessvorrichtung in Aktion tritt. In einer bevorzugten Ausführungsform ist im Bereich der Kavitäten ein Schieber angeordnet, der so ausgebildet ist, dass er bei in der Regel geschlossener Spritzgiessvorrichtung durch eine Relativbewegung ein erstes mit einem zweiten Teil in Wirkverbindung bringen kann. Ein Vorteil dieses Wirkverbindungsmittels besteht darin, dass die Spritzgiessvorrichtung unabhängig vom Wirkverbinden der mindestens zwei Teile geschlossen werden kann und das Wirkverbinden von der Schliessbewegung der Spritzgiessvorrichtung entkoppelt ist. Dadurch besteht die Möglichkeit den Vorgang besser abzustimmen, respektive zu justieren (Weg und/oder Geschwindigkeit und/oder Kraft), ohne den Maschinentakt nachteilhaft zu beeinflussen. Je nach Anwendungsgebiet wäre es sonst erforderlich die Arbeitsgeschwindigkeit zu reduzieren, da sonst das optimale Zusammenfügen der wirkzuverbindenden Teile nicht gewährleistet wäre, respektive die Teile Schaden nehmen würden. Ohne den Wirkverbindungsmechanismus wäre demnach nur eine reduzierte Produktionsgeschwindigkeit möglich. Der Wirkverbindungsmechanismus wird vorzugsweise hydraulisch oder elektrisch angetrieben und weist bei Bedarf Sensoren auf, welche den Vorgang überwachen. Der Wirkverbindungsmechanismus ist bei Bedarf so ausgestaltet, dass eine kavitätengerechte, d. h. auf jede oder eine Gruppe von Kavitäten abgestimmte, Montage möglich ist.

Die Vorrichtung zur Durchführung des Verfahrens ist vorzugsweise so ausgestaltet, dass sie zusammen mit handelsüblichen normierten, Spritzgiessmaschinen verwendbar ist. Die Spritzgiessvorrichtung ist daher so ausgestaltet, dass sie zwischen Holmen einer Spritzgiessmaschine Platz findet. Die beweglichen Teile der Spritzgiessvorrichtung sind bevorzugt gegenüber den Holmen der Spritzgiessmaschine oder dem Maschinenbett gelagert, respektive abgestützt. Die Bewegung der beweglichen Teile der Spritzgiessvorrichtung wird durch mindestens einen Koordinationsmechanismus mit der Bewegung der Spritzgiessvorrichtung abgestimmt. Bevorzugt ist ein Koordinationsmechanismus der die zurückgelegten Wege der bewegten Teile abhängig von der Trennebene so aufeinander abstimmt, dass die Mittelteile effizient und bei Bedarf gleichzeitig gedreht werden.

Bei einer weiteren bevorzugten Ausführungsform einer Vorrichtung werden die einzelnen Teile vorzugsweise im Bereich von vier Trennebenen hergestellt und/oder miteinander wirkverbunden. Es ist vorgesehen, dass in der Regel während dem Wirkverbinden weitere Teile gespritzt werden. Ein Wirkverbindungsmechanismus garantiert die effiziente Montage.

Eine bevorzugte Form des Wirkverbindens erfolgt durch Umspritzen des ersten und des zweiten Teils. Zu diesem Zweck wird mittels einer in der Regel seitlich oder oberhalb der Spritzgiessvorrichtung angeordneten Plastifiziereinheit, Kunststoffschmelze in Kavitäten im Bereich der dritten Trennebene eingebracht, so dass das mindestens eine erste und das mindestens eine zweite Teil wirkverbunden werden. Die für ein Umspritzen erforderlichen zusätzlichen Kavitäten im Bereich einer dritten, mittleren Trennebene, werden zum Beispiel durch Rückziehen eines Kerns oder durch speziell gestaltete konkave Formhälften gebildet, die mit entsprechenden, konvex gestalteten Gegenseiten im Bereich der ersten und zweiten Trennebene zusammenwirken.

Eine zur Durchführung des Verfahrens geeignete Vorrichtung weist eine erste, feststehend angeordnete Formhälfte und eine zweite, gegenüber der ersten entlang von Führungsmitteln (Holmen, Führungsschienen) beweglich angeordnete, Formhälfte auf. Zwischen der ersten und der zweiten Formhälfte sind mindestens zwei je um eine Drehachse drehbare Mittelteile angeordnet. Die Drehachsen der beiden vorzugsweise prismatisch ausgebildeten Mittelteile sind in der Regel parallel oder in einem 90°-Winkel zueinander ausgerichtet. Die Mittelteile sind entlang von Führungsmitteln geführt. Die erfindungsgemäße Spritzgiessvorrichtung ist im Patentanspruch 1 beschrieben. Die Mittelteile sind um eine senkrecht zur Hauptbewegungsrichtung der Spritzgiessmaschine stehende Achse drehbar und parallel dazu verschiebbar angeordnet, so dass sie bei geöffneter Spritzgiessvorrichtung um ihre Achse drehbar sind. Je nach Anwendungsgebiet können die Mittelteile hängend oder horizontal vorstehend angeordnet sein. Die Mittelteile weisen in der Regel eine gerade Anzahl von zueinander paarweise parallel angeordneten, korrespondierenden Seitenflächen auf.

Im Bereich der dritten Trennebene werden die Teile aus der ersten und die Teile aus der zweiten Trennebene vorzugsweise durch eine Reibverbindung, Schnappverbindung, Pressverbindung, durch Umspritzen mit derselben oder einer weiteren Kunststoffkomponente, Ultraschallschweissen oder Reibschweissen lösbar oder unlösbar miteinander wirkverbunden. Je nach Anwendungsgebiet erfolgt die Wirkverbindung über einen Wirkerverbindungsmechanismus der eingängig beschriebenen Art.

Bei einer Vorrichtung können zwischen zwei Mittelteilen ein oder mehrere weitere Formteile vorgesehen werden, die in Verbindung mit den um eine Achse drehbaren Mittelteilen zur Bildung von einer oder mehreren Kavitäten dienen. Dieses mindestens eine weitere Formteil wird vorzugsweise entlang derselben Führungsmittel wie die Mittelteile geführt. Das Formteil ist ein- oder mehrteilig so ausgebildet, dass die wirkverbundenen Teile entnehmbar sind. Die Formhälfte und/oder die Mittelteile weisen bei Bedarf Schieber auf, welche eine bessere Entformbarkeit der hergestellten Teile garantiert. Die Kinematik der sich gegeneinander bewegenden Teile ist auf das zusätzlich Element abgestimmt, respektive trägt diesem Rechnung.

Das in PCT'699 beschriebene Verfahren kann mit herkömmlichen Spritzgiessformen nicht realisiert werden. Es sind daher Spritzgiessformen erforderlich, welche den besonderen Anforderungen gerecht werden. Im Unterschied zu herkömmlichen Spritzgiessformen weisen die zur Durchführung des Verfahrens geeigneten Spritzgiessvorrichtungen wesentlich mehr bewegliche Teile auf, die zueinander in präzise Koordination gebracht werden müssen, so dass ein kollisionsfreies Öffnen und Schliessen der Spritzgiessvorrichtung garantiert wird.

Die Spritzgiessvorrichtung eignet sich zur Herstellung und Montage von mehrteiligen Kunststoffteilen. Dabei werden im Bereich von mindestens zwei Trennebenen Kunststoffteile durch Spritzgiessen gefertigt und im Bereich von mindestens einer weiteren Trennebene montiert, respektive wirkverbunden. Alternativ oder in Ergänzung werden die Teile ausserhalb im Bereich der freien Seitenflächen der Mittelteile bearbeitet und/oder montiert und/oder entnommen.

Die Vorrichtung eignet sich unter anderem für die Herstellung von Verschlüssen für Getränkeverpackungen. Zum Beispiel können mehrteilige "Push-Pull"-Verschlüsse mit einer Basis und einer gegenüber der Basis verschiebbar angeordneten Kappe in einer Spritzgiessvorrichtung hergestellt und montiert werden. Dabei können die einzelnen Teile je einzeln aus einer oder mehreren Materialkomponenten bestehen. Die Montage erfolgt entweder über die Schliessbewegung der Spritzgiessvorrichtung oder über eine separate Wirkverbindungsvorrichtung, welche die Teile wirkverbindet nachdem die Spritzgiessvorrichtung geschlossen ist. Bei der separaten Wirkverbindungsvorrichtung handelt es sich beispielsweise um mindestens einen im Bereich der Kavitäten angeordneten hydraulisch betätigten Schieber, mittels dem die Teile eine Relativbewegung gegeneinander ausführen und so montiert werden.

Beispielsweise besteht die Möglichkeit medizinische Spritzen oder ähnliche Teile herzustellen, indem in einer ersten Trennebene ein Aussenteil und in der zweiten Trennebene ein aus einer oder mehreren Materialkomponenten bestehender Stempel mit Dichtung hergestellt wird. Nach dem Öffnen der Spritzgiessvorrichtung und dem anschliessenden Drehen des ersten und des zweiten Mittelteils wird der Stempel beim Schliessen der Spritzgiessvorrichtung in das Aussenteil eingesetzt. Infolge der hohen Temperatur wird erreicht, dass keine Keime vorhanden sind. Alternativ besteht die Möglichkeit eine vierte Trennebene in die Produktion mit einzubeziehen und die Montage ausserhalb vorzunehmen.

Die Mittelteile der Spritzgiessvorrichtung sind vorzugsweise quaderförmig ausgestaltet und weisen vier Seitenflächen auf, wovon je zwei zueinander parallel angeordnet sind. Die Mittelteile werden in der Regel bei jedem Arbeitsschritt um 90° oder 180° gedreht, so dass im Bereich der ersten, respektive der zweiten, Trennebene hergestellte Teile nach einem oder zwei Arbeitsschritten von der ersten, respektive der zweiten, Trennebene in den Bereich der dritten Trennebene gelangen, wo sie miteinander in Wirkverbindung gebracht werden. In den Stationen zwischen den Trennebenen, den so genannten Zwischen- oder Freienstationen, sind bei Bedarf weitere Verarbeitungsschritte, die z.B. von Handlingrobotern ausgeführt werden, vorgesehen. Falls gewünscht, besteht die Möglichkeit freie Kavitäten oder am Mittelteil haftende Teile mit Etiketten zu versehen, die beim nächsten Einspritzvorgang mit neuen oder bestehenden Teilen verbunden werden. Die Zwischenstationen werden bei Bedarf zum Kühlen von hergestellten Teilen verwendet. Die Mittelteile sind gegenüber den feststehenden Teilen der Spritzgiessvorrichtung vorzugsweise um eine Achse endlos drehbar. Die Versorgung der um eine Achse drehbar angeordneten Mittelteile mit Medien wie Wasser, Luft, Öl und/oder Elektrizität, sowie Sensorsignalen und Stellgrössen erfolgt vorzugsweise koaxial über eine untere und/oder obere Haltevorrichtung. Die Haltevorrichtungen sind zu diesem Zweck so ausgestaltet, dass sie eine koaxiale Medienführung ermöglichen.

In den Trennebenen hergestellte, respektive montierte Teile werden zwischen den einzelnen Stationen vorzugsweise mittels den Mittelteilen bewegt. Zu diesem Zweck weisen die Mittelteile aktive oder passive Haltemittel auf. Die Mittelteile weisen in der Regel separate Zufuhren für Energie, Informationen und Betriebsstoffe wie Strom, Wasser, Hydrauliköl und -luft auf. Energie und Medien werden vorzugsweise durch die Drehachsen der Mittelteile geführt, so dass diese endlos um ihre Achsen gedreht werden können.

Die in PCT'699 beschriebene Vorrichtung weist den Nachteil auf, dass beim Öffnen und beim Schliessen der Spritzgiessform keine Zentrierung der Formhälften und/oder der Mittelteile zueinander vorgesehen ist. Wie es sich gezeigt hat, ist es jedoch, insbesondere bei grösseren Spritzgiessformen, praktisch nicht möglich, die meist tonnenschweren Bestandteile der Spritzgiessform so präzise zu positionieren, dass sie beim Schliessen der Form immer genau aufeinander stimmen. Dies hat zur Folge, dass die hochpräzisen und empfindlichen Kavitäten beschädigt werden können, so dass ein einwandfreies Funktionieren der Spritzgiessform nicht gewährleistet werden kann.

Beim Öffnen und Schliessen einer Spritzgiessvorrichtung stellt die Zentrierung und Ausrichtung der Formhälften und der Mittelteile zueinander eine Schwierigkeit dar, die auf jeden Fall garantiert sein muss. Da es sich bei den Bestandteilen der Spritzgiessvorrichtung in der Regel um tonnenschwere Metallblöcke handelt, die mit erheblicher Geschwindigkeit geöffnet und geschlossen werden, kann eine Zentrierung der Form nicht über die Kavitäten alleine erfolgen. Aus dem Stand der Technik sind Zentriermittel bekannt, welche zur Zentrierung von herkömmlichen Spritzgiessformen mit nur einer Trennebene verwendet werden. Es handelt sich dabei in der Regel um einseitig entweder an der feststehenden oder der fahrbaren Formhälfte vorstehend angebrachte Zapfen, welche in dafür vorgesehene Öffnungen der anderen Formhälfte eingreifen. Da herkömmliche Spritzgiessformen mit nur einer Trennebene in der Regel nur in einer Richtung bewegt werden, stellt die Anordnung der Zentriermittel in der Regel kein Problem dar. Bei Spritzgiessvorrichtungen mit zwei drehbaren Mittelteilen, ist eine exakte Positionierung der Formhälften jedoch nur möglich, falls die Zentriermittel eine spezielle Anordnung und Ausgestaltung aufweisen, welche eine exakte Vorzentrierung und Zentrierung der beweglichen Formteile garantiert. Falls erforderlich weist eine Vorrichtung eine zweistufige Zentrierung mit einer vorgeschalteten Vor- und einer nachfolgenden oder überlagerten Feinzentrierung auf. Mittels der Vorzentrierung werden die Formteile gefangen und anschliessen mit der Feinzentrierung gegeneinander in präzise Ausrichtung gebracht.

Im Unterschied zu herkömmlichen Spritzgiessformen muss die Anordnung der Zentriermittel besonderen Anforderungen genügen, damit die Spritzgiessvorrichtung überhaupt geschlossen werden kann. Die aus dem Stand der Technik bekannten Anordnungen von Zentriermitteln sind dafür nicht geeignet, da ein Schliessen der Form nicht möglich wäre. Die Zentriermittel müssen so angeordnet sein, dass die Formhälften und die beiden Mittelteile in den dafür vorgesehenen unterschiedlichen Positionen schliessbar sind. Bei der Verwendung von Zentrierzapfen bedeutet dies, dass z.B. die erste, feststehende Formhälfte im Bereich der vier Ecken vier vorstehende Zentrierzapfen aufweist, welche mit vier an den entsprechenden Seitenflächen des ersten Formmittelteils angebrachten Zentrierbuchsen korrespondieren. Das zweite Formmittelteil weist wiederum an den entsprechenden Seitenflächen vier vorstehende Zentrierzapfen auf, welche mit entsprechenden Zentrierbuchsen des ersten Mittelteils und der zweiten, beweglich angeordneten Formhälfte beim Schliessen der Spritzgiessvorrichtung wirkverbindbar sind. Die Zentrierzapfen und die Zentrierbuchsen sind so ausgestaltet, dass sie ein Auffangen und Vorzentrieren der beweglichen Teile bewirken, so dass diese im Fall einer gewissen Fehlstellung beim Schliessen in die richtige Endposition zu liegen kommen, ohne dass die empfindlichen Kavitäten Schaden nehmen. Die Zentrierzapfen und die Zentrierbuchsen weisen bei Bedarf zumindest bereichsweise eine gewisse Konizität auf, welche das gegenseitige Ausrichten unterstützt. Aus diesem Grund sind die Zentriermittel vorzugsweise so ausgebildet, dass sie eine Zentrierung der Form garantieren bevor diese ganz geschlossen ist, respektive die empfindlichen Bereiche der Kavitäten miteinander wirkverbunden werden. Alternativ oder in Ergänzung weisen die Mittelteile weitere Zentriermittel auf, welche zur Arretierung der Drehbewegung der Mittelteile um ihre Drehachse in dafür vorgesehenen Positionen geeignet sind. Bei den weiteren Zentriermitteln handelt es sich in der Regel um Arretierstifte, welche in dafür vorgesehene Arretieröffnungen eingreifen und so ein Weiterdrehen der Mittelteile nach Erreichen einer definierten Endposition verhindern. Die Arretierstifte sind vorzugsweise hydraulisch oder elektrisch angetrieben und weisen einen Einrastmechanismus auf. Bei einem quaderförmigen Mittelteil sind die Arretieröffnungen, in welche der oder die dafür vorgesehenen Arretierstifte eingreifen in der Regel in einem 90°- oder einem 180°-Winkel angeordnet, so dass das Mittelteil in einem 90°- oder 180°-Winkel feststellbar ist. Die weiteren Zentriermittel dienen dazu, die Mittelteile beim Erreichen einer Endposition festzustellen, damit Hauptzentriermittel, z.B. in Form von Zentrierzapfen, die Feinzentrierung vornehmen können.

Damit die Spritzgiessvorrichtung in der Regel einfach zwischen die Holmen einer Spritzgiessmaschine eingesetzt und entnommen werden kann, genügen die Halterungen der Mittelteile und, falls vorgesehen, der weiteren Formhälften besonderen Anforderungen genügen. Die Halterung weist zudem den Vorteil auf, dass sie für die Verwendung mit konventionellen Spritzgiessmaschinen und Spritzgiessvorrichtungen mit einem oder zwei Mittelteilen geeignet ist.

Eine bevorzugte Ausführungsform einer Halterung weist eine untere Lagerung auf, die mit dem Maschinenbett der Spritzgiessmaschine direkt oder indirekt wirkverbunden, auf dieser abgestützt und/oder entlang dieser geführt ist. Eine obere Lagerung erfolgt mittels einer Traverse, die mit einem oder zwei Holmen der Spritzgiessmaschine wirkverbunden und entlang dieser geführt ist. Die Traverse und/oder die untere Lagerung weist bei Bedarf ein Arretiermittel auf, das zur Arretierung des drehbaren Formträgers in dafür vorgesehenen Positionen dient. Die Halterung ist so ausgebildet, dass die Mittelteile in Richtung der Holmen der Spritzgiessmaschine verschiebbar sind. Im unteren Bereich erfolgt die Lagerung zum Beispiel mittels auf dem Maschinenbett der Spritzgiessmaschine abgestützten Schienen. Im oberen Bereich ist die Traverse über Linearlager mit den Holmen wirkverbunden. Die Linearlager sind in der Regel so ausgebildet, dass sie einfach von den Holmen gelöst werden können, zum Beispiel vorzugsweise indem die Lagerschalen in vertikaler Richtung teilbar sind. Einer der Vorteile besteht darin, dass die Halterung im unteren Bereich eine schmale Ausgestaltung aufweist, die eine einfache und zeitsparende Entnahme zwischen den Holmen erlaubt. Durch die zweiseitige Führung wird garantiert, dass die Elemente der Spritzgiessvorrichtung mit hoher Präzision geführt werden. Ausserdem besteht die Möglichkeit, die Mittelteile sowohl unten als auch oben mit einem Antrieb, respektive einem Koordinationsmechanismus zu versehen.

Die Koordination der Komponenten einer Spritzgiessvorrichtung mit einer feststehenden ersten und einer beweglichen zweiten Formhälfte, zwischen denen ein erstes und ein zweites, um ihre Achsen drehbares Mittelteil hintereinander angeordnet sind, erfolgt vorzugsweise mittels einem Koordinationsmechanismus. Eine bevorzugte Ausführungsform eines Koordinationsmechanismus weist drei im wesentlichen parallel zueinander angeordnete Gewindespindeln auf, welche die Komponenten der Spritzgiessvorrichtung miteinander wirkverbinden. Der Koordinationsmechanismus weist eine erste Spindel auf, welche die erste, feststehende Formhälfte mit der zweiten, fahrbaren Formhälfte wirkverbindet. Die Spindel ist zweigeteilt und weist eine erste Hälfte mit einer ersten positiven Steigung und eine zweite Hälfte mit einer negativen, zur ersten gegenläufigen Steigung auf. Die Spindel ist mit den Formhälften über an den Formhälften angebrachte feststehende Spindelmuttern, respektive Axiallager wirkverbunden. Wird nun die Spritzgiessvorrichtung geöffnet oder geschlossen dreht sich die erste Spindel um ihre Längsachse. Infolge der gegenläufigen Spindelsteigung des ersten und des zweiten Teils der Spindel befindet sich die Spindelmitte der ersten Spindel immer in der Mitte zwischen der ersten feststehenden und der zweiten fahrbaren Formhälfte. Alternativ besteht die Möglichkeit die Spindel über eine geeignete Abstützung fest anzuordnen und dafür die Spindelmuttern drehbar anzuordnen. Im Bereich der Mitte der ersten Spindel befindet sich ein Spindelbock an dem eine zweite und eine dritte zweigeteilte Spindel abgestützt sind, wobei die zweite Spindel den Spindelbock mit der feststehenden Formhälfte und die dritte Spindel den Spindelbock mit der beweglichen Formhälfte wirkverbindet. Die zweite und die dritte Spindel sind so angeordnet, dass die Mitte der zweiten Spindel mit halber Geschwindigkeit der ersten Spindel und die Mitte der dritten Spindel mit der 1.5-fachen Geschwindigkeit der Mitte der ersten Spindel bewegt werden. Mit Bezugnahme auf die Geschwindigkeit der beweglichen zweiten Formhälfte bewegt sich die Mitte der zweiten Spindel mit einem Viertel der Geschwindigkeit der beweglichen Formhälfte und die Mitte der dritten Spindel mit drei Vierteln der Geschwindigkeit der beweglichen Formhälfte. Die Mitten der zweiten und der dritten Spindel sind mit dem ersten und dem zweiten Mittelteil der Spritzgiessform wirkverbunden und koordinieren deren Bewegung mit Bezug auf die feststehende und die beweglichen Formhälfte. Der beschriebene Koordinationsmechanismus bewirkt, dass beim Öffnen der Spritzgiessvorrichtung der Abstand zwischen den beiden Mittelteilen immer doppelt so gross ist wie der Abstand zwischen der feststehenden Formhälfte und dem ersten, respektive dem zweiten Mittelteil und der fahrbaren Formhälfte. Damit wird dem Umstand Rechnung getragen, dass beim Drehen der Mittelteile um ihre Achsen mehr Platz zwischen den Mittelteilen beansprucht wird als in der ersten und der letzten Trennebene.

Je nach Anwendungsgebiet erfolgt der Linearantrieb, respektive die Koordination der beweglichen Teile in y-Richtung mittels einem aktiven oder passiven ein- oder zweiseitigen Spindelantrieb, mittels einem koordinierten Zahnstangenantrieb oder aktiv, mittels einem koordinierten Hydraulikantrieb, z.B. über Hydraulikzylinder. Bei Bedarf oder alternativ kann eine Zahnstange in das Schienensystem integriert sein. Unter einem aktiven Antriebssystem wird ein Antrieb verstanden der eine eigene Energieversorgung aufweist und ein selbständiges Bewegen der beweglichen Teile ermöglicht. Unter einem passiven Antriebssystem wird ein Antrieb verstanden, der direkt oder indirekt mit dem Hauptantrieb der Spritzgiessmaschine wirkverbunden ist. Eine bevorzugte Ausführungsform eines passiven Antriebs weist koordinierende Spindeln auf.

Eine weitere Ausführungsform eines Koordinationsmechanismus weist sechs, in drei Gruppen paarweise koordinierte Zahnstangen auf. Je zwei Zahnstangen sind über ein Ritzel direkt oder indirekt miteinander Wirkverbunden, das zum Beispiel an einer der Traversen drehbar abgestützt ist. Die einander paarweise zugeordneten und im Wesentlichen parallel zueinander angeordneten Zahnstangen vollführen beim Öffnen und Schliessen eine Relativbewegung zueinander und sind über mindestens ein Zahnrad, das zumindest in eine der beiden Zahnstangen eingreift, miteinander wirkverbunden. Eine bevorzugte Ausführungsform ist so ausgebildet, dass die Achse des koordinierenden Zahnrades sich in etwa mit der halben Relativgeschwindigkeit bewegt. Das Teilungsverhältnis der Geschwindigkeit und damit des zurückgelegten Weges wird für die Positionierung der zwischen den äusseren Komponenten angeordneten inneren Komponenten wie z.B. die Mittelteile ausgenutzt. Andere Teilungsverhältnisse können durch mehrere, miteinander z.B. über eine Achse wirkverbundene, Zahnräder mit unterschiedlichem Durchmesser erreicht werden. Vorteile eines Spindelantriebes bestehen im einfachen Aufbau und in der Verwendung von normierten Komponenten.

Eine weitere Ausführungsform eines Koordinationsmechanismus weist miteinander wirkverbundene Hydraulikzylinder auf. Durch eine entsprechende Wahl der Durchmesser der Zylinder, respektive der ausgetauschten Ölvolumen wird erreicht, dass sich die dazwischen liegenden Teile mit der gewünschten Geschwindigkeit bewegen. Hydraulische Koordinationsmechanismen sind entweder aktiv über eine Hydraulikpumpe oder passiv über antreibende Hydraulikzylinder angetrieben. Bei Bedarf ist eine aktive Überwachung der Position der mittleren Teile vorgesehen, um Fehlstellungen zu vermeiden.

Ein Verfahren zur Herstellung eines mehrteiligen Produktes in einer Spritzgiessvorrichtung gemäss der hier offenbarten Vorrichtung soll nachfolgend vereinfacht beschrieben werden:

In einem ersten Verfahrensschritt werden im Wesentlichen gleichzeitig mindestens ein erstes und ein zweites Teil in der ersten und der dritten äusseren Trennebene bei geschlossener Spritzgiessvorrichtung durch Einspritzen von flüssigem Kunststoff in einander zugeordnete Kavitäten hergestellt. Währenddem wird im Wesentlichen gleichzeitig im Bereich der zweiten mittleren Trennebene mindestens ein erstes und ein zweites Teil mittels einem mindestens einen Wirkverbindungsmittel wirkverbunden. Anschliessend wird die Spritzgiessvorrichtung entlang der Trennebenen geöffnet und die beiden Formträger je um ihre Drehachse um einen Winkel von 90° oder 180° gedreht. Dabei bleiben die soeben in der ersten und der dritten Trennebene hergestellten Teile an den Formträgern haften und werden mit diesen mitbewegt.

Die in der mittleren Trennebene wirkverbundenen Teile werden mittels einem der Formträger um einen Winkel von 90° bewegt und in dieser Position entnommen oder mittels separaten Auswerfern ausgeworfen und unterhalb der Spritzgiessvorrichtung aufgefangen. Anschliessen wir die Spritzgiessvorrichtung erneut geschlossen und der Prozess beginnt wieder von vorne. In einer bevorzugten Variante wird beim Öffnen die zweite mittlere Trennebene in etwa doppelt so weit geöffnet wie die erste und die dritte Trennebene. Dies ermöglicht ein effizientes, zeitsparendes Drehen. Vorzugsweise erfolgt die Wirkverbindung der beiden ersten Teile in der zweiten mittleren Trennebene unabhängig von der Bewegung der Spritzgiessmaschine. Abhängig vom Anwendungsgebiet erfolgt die Wirkverbindung der beiden ersten Teile in der zweiten mittleren Trennebene in Gruppen von einander zugeordneten Kavitäten unabhängig voneinander.

Als Antrieb für die Drehung der in der Regel quaderförmigen Oberteile der Mittelteile um ihre Drehachsen wird pro Mittelteil vorzugsweise ein Elektro- oder ein Hydraulikmotor verwendet, der direkt oder indirekt mit den Mittelteilen wirkverbunden ist.

Ausführungsformen der Vorrichtung werden anhand von nachfolgenden Figuren näher erläutert. Es zeigen schematisch und stark vereinfacht:
- Figur 1: eine erste nicht erfindungsgemäße Ausführungsform einer Spritzgiessvorrichtung mit einer Spritzgiessma- schine;
- Figur 2: eine zweite nicht erfindungsgemäße Ausführungsform einer Spritzgiessvorrichtung;
- Figur 3: eine dritte nicht erfindungsgemäße Ausführungsform einer Spritzgiessvorrichtung von schräg oben;
- Figur 4: eine vierte nicht erfindungsgemäße Ausführungsform einer Spritzgiessvorrichtung von schräg oben;
- Figur 5: eine fünfte nicht erfindungsgemäße Ausführungsform einer Spritzgiessvorrichtung von schräg oben;
- Figur 6: die Ausführungsform aus Figur 5 von schräg unten;
- Figur 7: die Ausführungsform aus Figur 5 von vorne;
- Figur 8: die Ausführungsform aus Figur 5 von oben;
- Figur 9: zeigt eine erfindungsgemäße Ausführungsform einer Spritzgiessvorrichtung;
- Figur 10: zeigt eine geöffnete Spritzgiessvorrichtung von oben;
- Figur 11: zeigt die Spritzgiessvorrichtung aus Figur 10 geschlossen.

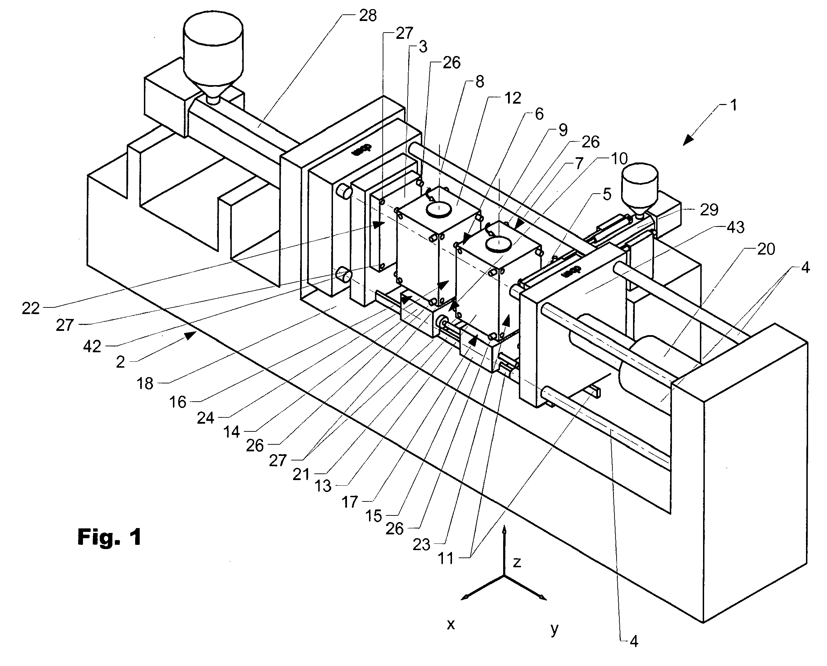

**Figur 1** zeigt eine erste Ausführungsform einer Spritzgiessvorrichtung 1 mit einer Spritzgiessmaschine 2. Die Spritzgiessvorrichtung 1 beinhaltet eine erste, feststehend angeordnete Formhälfte 3 und eine zweite, entlang von Führungsmitteln 4 verschiebbar (y-Richtung) angeordnete zweite Formhälfte 5. Die erste feststehende Formhälfte 3 ist an einer feststehenden ersten Formaufspannplatte 42 und die verschiebbare zweite Formhälfte 5 ist an einer zweiten, entlang von Holmen 4 verschiebbaren zweiten Formaufspannplatte 43 der Spritzgiessmaschine 2 befestigt.

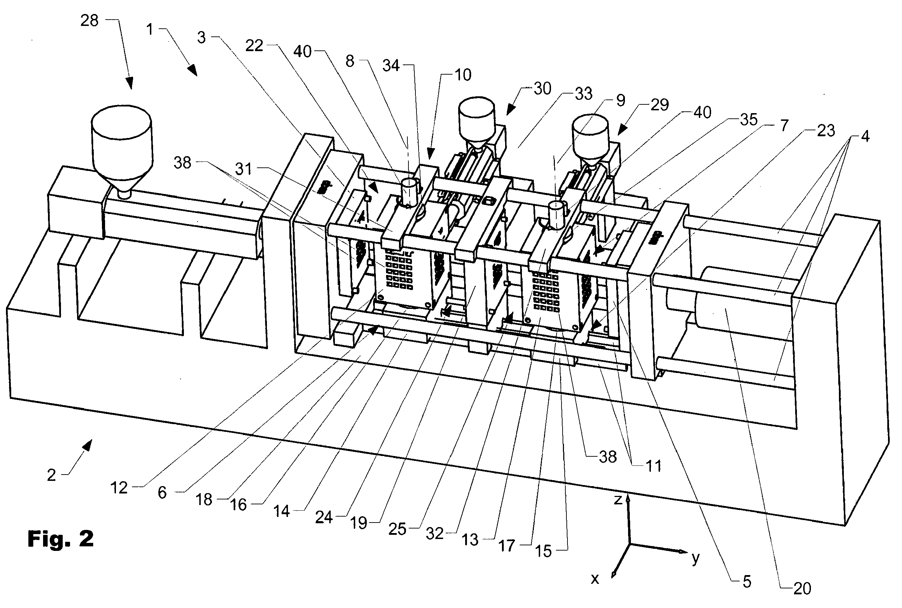

Als Führungsmittel 4 dienen in der gezeigten Ausführungsform die Holmen 4 der Spritzgiessmaschine 2. Die Holmen 4 im vorderen Bereich sind nur teilweise (geschnitten) dargestellt, so dass eine bessere Sicht auf die Spritzgiessvorrichtung 1 möglich ist. Zwischen der ersten und der zweiten Formhälfte 3, 5 ist ein erstes und ein zweites Mittelteil 6, 7 zu erkennen. Das erste und das zweite Mittelteil 6, 7 weisen je einen im wesentlichen quaderförmigen Oberteil 12, 13 (Formträger) mit Kavitätenhälften (nicht im Detail dargestellt, vgl. Figur 2) auf, die je um eine hier vertikal (z-Richtung) angeordnete Drehachse 8, 9 angetrieben drehbar angeordnet sind. Das erste und das zweite Mittelteil 6, 7 sind mittels Führungsmitteln, hier in Form von zwei parallel zu den Holmen 4 und zwischen diesen auf einem Maschinenbett 18 der Spritzgiessmaschine 2 angeordneten Führungsschienen 11 gelagert. Die Mittelteile 6, 7 weisen je eine Halterung 10 in Form einer Basis 14, 15 auf, welche entlang der Führungsschienen 11 beweglich angeordnet sind.

Je nach Ausführungsform sind die Formträger 12, 13 (Oberteile) und die Basen 14 (Unterteile) über normierte Schnittstellen (nicht näher dargestellt) zur Übergabe von Medien wie Wasser, Luft, Strom, Hydraulik und elektrische mechanische Energie lösbar wirkverbunden. Zumindest zur Übergabe von flüssigen und gasförmigen Medien eignen sich handelsübliche, selbstdichtende Schnellkupplungen besonders. Die Übergabe von elektrischer Energie und digitalen Informationen erfolgt üblicherweise mittels dafür geeigneten Steckverbindungen.

Bei der gezeigten Ausführungsform erfolgt der Austausch von Medien und von Energie zwischen dem Oberteil 12, 13 und dem Unterteil 14, 15 der Mittelteile 6, 7 vorzugsweise koaxial durch die entsprechende Drehachse. Alle Medien- und Energieleitungen (nicht näher dargestellt) sind vorzugsweise mit dem Unterteil 14 wirkverbunden.

Bei der gezeigten Ausführungsform sind die Oberteile 13 nur einseitig gehalten. Die Basen 14, 15 der Mittelteile 6, 7 weisen vorzugsweise je eine Dreheinheit 16, 17 auf, die zum Drehen der Oberteile 12, 13, um ihre entsprechende, hier vertikale Drehachse 8, 9 (z-Richtung) gegenüber ihrer Basis 14, 15 dienen. Die Dreheinheiten 16, 17 sind zwischen den Basen 14, 15 und den Oberteilen 12, 13 angeordnet und weisen koaxiale Kanäle und Öffnungen auf, die zum Austausch von Medien und Energie zwischen den Unterteilen 14, 15 und den Oberteilen 13 dienen. Die Spritzgiessvorrichtung 1 und die Zentriermittel 26, 27 sind so ausgestaltet, dass sie in 90° und/oder 180°-Schritten geöffnet und geschlossen werden können.

Je nach Ausführungsform sind die Führungsschienen 11 ein Bestandteil der Spritzgiessmaschine 2 und sind vorzugsweise mit dem Maschinenbett 18 derselben fest verbunden. Alternativ sind die Führungsschienen 11 ein Bestandteil der Spritzgiessvorrichtung 1 und werden, zum Beispiel bei einem Formwechsel, mittels dieser aus der Spritzgiessmaschine 2 entnommen. Die Führungsschienen 11, respektive die Halterung 10 der Oberteile 12, 13 sind vorzugsweise so ausgestaltet, dass sie in Winkel und Ausrichtung justierbar sind, so dass eine präzise Ausrichtung gegenüber den Formhälften 3, 5 und den Führungsmitteln 4, 11 möglich ist.

Die zweite, beweglich angeordnete Formhälfte 5 wird über einen erster Hydraulikzylinder 20 angetrieben, der gleichzeitig zum Erzeugen der zwischen der ersten und der zweiten Formhälfte 3, 5 wirkenden Schliesskraft der Spritzgiessmaschine 2 dient. Alternative Ausführungsformen, wie z.B. aus dem Stand der Technik bekannten Kniehebelmechanismen sind möglich. Abhängig von der Ausführungsform, ist ein über die Holmen 4 realisierter Antrieb der zweiten Formhälfte 5 möglich. Die beiden Mittelteile 6, 7 weisen einen Antrieb, hier schematisch als Spindelantrieb 21 dargestellt, auf. Der Spindelantrieb 21 wirkt in der gezeigten Ausführungsform im Fussbereich der Mittelteile 6, 7, in der Nähe der Führungsschienen 11 und dient zum Bewegen der Mittelteile 6, 7, respektive Öffnen und Schliessen der Trennebenen 22, 23, 24, in Koordination zur Bewegung der zweiten Formhälfte 5. In der Regel ist der Spindelantrieb 21 so ausgebildet, dass das erste Mittelteil 6 im Wesentlichen mit 1 /3 und das zweite Mittelteil 7 im Wesentlichen mit 2/3 der Geschwindigkeit der zweiten Formhälfte 5 bewegt werden. Dadurch wird erreicht, dass im geöffneten Zustand zwischen den Formhälften 3, 5 und den Mittelteilen 6, 7 gleiche Abstände resultieren. Andere Antriebsmittel, z.B. Hydraulikzylinder oder Elektroantriebe sind je nach Ausführungsform möglich. Je nach Ausführungsform sind andere Übersetzungsverhältnisse als 1/4, 2/4, 1/4 bevorzugt, so dass beim Öffnen der Form die Abstände zwischen den Teilen andere Masse aufweisen.

In der gezeigten Darstellung ist die Spritzgiessvorrichtung 1 in geöffnetem Zustand dargestellt. Die in einer ersten, einer zweiten und einer dritten Trennebene 22, 23, 24 angeordneten Kavitäten (nicht im Detail dargestellt) sind in dieser Position geöffnet. Die Formhälften 3, 5 und die Mittelteile 6, 7 sind so weit auseinander gefahren, dass die Mittelteile um ihre Drehachsen 8, 9 gemeinsam oder unabhängig voneinander gedreht werden können.

Eine erste Plastifiziereinheit 28, die hier auf dem Maschinenbett 18 hinter der ersten Formhälfte 3 angeordnet ist, dient zum Einspritzen von Kunststoffschmelze (nicht näher dargestellt) in die im Bereich der ersten Trennebene 22 angeordneten Kavitäten bei der geschlossenen Spritzgiessvorrichtung 1. Eine zweite Plastifiziereinheit 29 die hier hinter der Spritzgiessvorrichtung 1 und im Wesentlichen in einem rechten Winkel zu dieser angeordnet ist, dient zum Einspritzen von Kunststoffschmelze in Kavitäten, welche im Bereich der zweiten Trennebene 23 angeordnet sind. Die zweite Plastifiziereinheit 29 ist so ausgestaltet, dass sie nur bei geschlossener Spritzgiessvorrichtung 1 mit dieser wirkverbunden ist und ein Öffnen derselben nicht behindert. Alternativ oder in Ergänzung besteht die Möglichkeit eine mit der zweiten Formhälfte dauernd wirkverbundene Einspritzvorrichtung vorzusehen, die z.B. oberhalb des ersten Hydraulikzylinders 20 angeordnet ist.

Zentriermittel hier in Form von Zentrierzapfen 26 und Zentrierbohrungen 27 dienen zum Fangen und Zentrieren der Formhälften 4, 5 und der Mittelteile 6, 7 nach dem Drehen der Mittelteile 6, 7 mittels der Dreheinheiten 16, 17 um ihre Drehachsen 8, 9. Die Zentriermittel verhindern, dass die Kavitäten in den Trennebenen 22, 23, 24, z.B. infolge einer Fehlstellung beim Schliessen der Spritzgiessvorrichtung 1, Schaden nehmen. Je nach Anwendungsgebiet sind die Zentrierzapfen 26 und/oder die Zentrierbohrungen 27 ganz oder bereichsweise konisch ausgebildet, so dass eine optimale Zentrierung erreicht wird. Damit die beiden Formhälften 4, 5 und die beiden Mittelteile 6, 7 der Spritzgiessvorrichtung 1 überhaupt geschlossen werden können, sind die Zentrierzapfen 26 und die Zentrierbohrungen 27 mit Bezug auf die Drehachsen 8, 9 drehsymmetrisch alternierend angeordnet. Im Unterschied zu einer Spritzgiessvorrichtung mit keinem oder nur einem Mittelteil muss die Anordnung der Zentriermittel einer besonderen Anordnung genügen. Wie zu erkennen ist, sind die Zentriermittel 26, 27 hier im Randbereich der Formhälften 4, 5, respektive der Mittelteile 6, 7, angeordnet. Andere Anordnungen sind möglich. Die Zentriermittel 26, 27 können bei Bedarf so ausgestaltet werden, dass sie bei geschlossener Spritzgiessvorrichtung 1 zur Entnahme der Spritzgiessvorrichtung 1 aus der Spritzgiessmaschine 2 dienen.

**Figur 2** zeigt eine zweite Ausführungsform einer Spritzgiessvorrichtung 1 in einer perspektivischen Ansicht von schräg oben. Die Nummerierung entspricht der von Figur 1, so dass hier nicht beschriebene Bereiche aus Figur 1 hervorgehen. Die gezeigte Spritzgiessvorrichtung 1 weist zwischen einer feststehenden ersten und einer in Richtung von Holmen 4 (y-Richtung) beweglichen zweiten Formhälfte 3, 5 eine in Richtung der Holmen 4 beweglich angeordnete dritte Formhälfte 19 auf, die zwischen dem einen ersten Mittelteil 6 und dem zweiten Mittelteil 7 angeordnet ist und in der Regel auf zwei gegenüberliegenden Seiten Kavitätenhälften aufweist. Die Spritzgiessvorrichtung 1 weist zwischen der ersten Formhälfte 3 und dem ersten Mittelteil 6, respektive dem ersten Mittelteil 6 und der dritten Formhälfte 19, respektive der dritten Formhälfte 19 und dem zweiten Mittelteil 7, respektive dem zweiten Mittelteil 7 und der zweiten Formhälfte 5, eine erste, eine zweite, eine dritte und eine vierte Trennebene 22, 23, 24, 25 auf. Im Bereich der Trennebenen 22, 23, 24, 25 weisen die Formhälften 3, 5, 19, respektive die Mittelteile 6, 7 Kavitäten 38 auf, in die bei geschlossener Spritzgiessvorrichtung mittels einer ersten längs und einer zweiten und einer dritten, seitlich angeordneten Plastifiziereinheiten 28, 29, 30 Kunststoffschmelze in die Kavitäten 38 eingespritzt wird. Die Plastifiziereinheiten 28, 29, 30 sind bei der gezeigten Ausführungsform stationär angeordnet. Die zweite und die dritte, seitlich angeordneten Plastifiziereinheiten 29, 30 sind so ausgestaltet, dass sie beim Öffnen der Trennebenen 22, 23, 24, 25 abgekoppelt werden. Je nach Anwendungsgebiet ist eine andere Anordnung der Plastifiziereinheiten möglich.

Das erste und das zweite Mittelteil 6, 7 sind je um eine hier vertikale Drehachse 8, 9 drehbar angeordnet. Im Unterschied zu der in Figur 1 beschriebenen Ausführungsform sind die Mittelteile 6, 7 der hier gezeigten Ausführungsform nicht nur unten im Bereich des Maschinenbetts 18, sondern mittels einer ersten und einer zweiten oberen Traverse 31, 32 auch oberhalb gelagert. Die Halterung 10 und Führung der Oberteile 12, 13 der Mittelteile 6, 7 umfasst je eine auf dem Maschinenbett 18 abgestützte Basis 14, 15 und je eine obere Traverse 31, 32. Die Vorrichtung ist so ausgestaltet, dass sie einfach aus der Spritzgiessmaschine entnehmbar ist.

Die dritte Formhälfte 19 ist im unteren Bereich auf den Führungsschienen 11 und im oberen Bereich mittels einer dritten oberen Traverse 33 geführt. Die Traversen 31, 32, 33 sind entlang der Holmen 4 verschiebbar ausgebildet. Der Antrieb (nicht näher dargestellt) der Mittelteile 6, 7 und der dritten Formhälfte 19 in Holmrichtung (y-Richtung) ist in der Regel so ausgebildet, dass beim Öffnen und beim Schliessen der Spritzgiessvorrichtung 1 das erste Mittelteil 6 im Wesentlichen mit 1/4, die dritte Formhälfte 19 im Wesentlichen mit 2/4 und das zweite Mittelteil 7 im Wesentlichen mit 3/4 der Geschwindigkeit der zweiten Formhälfte 5 bewegt wird, so dass die Spritzgiessvorrichtung im Bereich der Trennebenen 22, 23, 24, 25 gleichmässig geöffnet werden. Andere Übersetzungsverhältnisse sind möglich.

Der Linearantrieb in y-Richtung erfolgt vorzugsweise mittels einem aktiven oder passiven ein- oder zweiseitigen Spindelantrieb, mittels einem Zahnstangenantrieb oder mittels Hydraulikzylindern. Bei Bedarf kann eine Zahnstange in das Schienensystem integriert sein. Unter einem aktiven Antriebssystem wird ein Antrieb verstanden der eine eigene Energieversorgung aufweist und ein selbständiges Bewegen der beweglichen Teile ermöglicht. Unter einem passiven Antriebssystem wird ein Antrieb verstanden, der direkt oder indirekt mit dem Hydraulikantrieb 20 der Spritzgiessmaschine 2 wirkverbunden ist. Eine bevorzugte Ausführungsform eines passiven Antriebs weist koordinierende Spindeln auf. Als Antrieb 40 für die Drehung der hier quaderförmigen Oberteile 12, 13 der Mittelteile 6, 7 um ihre Drehachsen 8, 9 wird pro Mittelteil 6, 7 vorzugsweise ein Elektro- oder ein Hydraulikmotor verwendet, der direkt oder über ein Getriebe indirekt mit den Drehachsen der Mittelteile 6, 7 wirkverbunden ist.

Die zweiseitige Lagerung bietet unter anderem die Vorteile, dass eine präzisere Führung und sowohl unten als auch oben ein Antrieb möglich ist, so dass die Massekräfte bei grosser Beschleunigung reduziert sind. Zur Entnahme der Spritzgiessvorrichtung 1 aus der Spritzgiessmaschine 2 sind die Traversen 31, 32, 33 der gezeigten Ausführungsform vorzugsweise so ausgestaltet, dass die Wirkverbindung mit den Holmen 4 der Spritzgiessmaschine 2 gelöst werden kann. Ebenso ist die untere Lagerung der Mittelteile 6, 7 und der dritten Formhälfte 19 vorzugsweise so ausgestaltet, dass die Wirkverbindung zu den Führungsschienen 11 gelöst werden kann. Je nach Ausführungsform erfolgt die Trennung der Wirkverbindung im Bereich der Dreheinheiten 16, 17 der Mittelteile 6, 7 oder zwischen den Basen 14, 15 (Unterteile) und den Führungsschienen 11. Infolge der schlanken Ausgestaltung der Lagerung und der einfachen Trennung der Wirkverbindungen besteht die Möglichkeit, die Spritzgiessvorrichtung 1 von oben her aus der Spritzgiessmaschine 2 zu entnehmen und bei Bedarf wieder in diese einzusetzen. Vereinfacht dargestellt weist die Lagerung des Mittelteils im oberen Bereich eine Traverse auf, die mit Holmen 4 einer Spritzgiessvorrichtung 2 wirkverbindbar ist und im unteren Bereich ein Schienensystem, das auf dem Maschinenbett 18 der Spritzgiessmaschine 2 gelagert ist. Bei einer Ausführungsform dient das Oberteil als Form, Formhälfte oder Formträger. Damit das Oberteil des Mittelteils um eine Drehachse drehbar ist, ist im Bereich des Unterteils und im Bereich der oberen Traverse eine untere und eine obere Dreheinheit vorgesehen, welche bei Bedarf im Innern Kanäle aufweisen, die für die koaxiale Zufuhr von Medien für das Oberteil dienen.

Die hier gezeigte Ausführungsform ist insbesondere zur Herstellung von mehrteiligen Kunststoffteilen geeignet, die aus mehreren Kunststoffkomponenten bestehen. Ein Herstellungsverfahren kann wie folgt aussehen. Bei geschlossener Spritzgiessvorrichtung 1 werden im Bereich der vier Trennebenen 22, 23, 24, 25 im Wesentlichen zeitgleich Kunststoffteile durch Einspritzen von Kunststoffschmelze in Kavitäten 38 gebildet. Anschliessend werden die Kavitäten 38 durch Auseinanderfahren der ersten, der zweiten und der dritten Formhälfte 3, 5, 19 und der Mittelteile 6, 7 geöffnet. Die in den Kavitäten 38 gebildeten Teile bleiben an den Oberteilen 12, 13 der Mittelteile 6, 7 haften und werden mittels diesen dem nächsten Verarbeitungsschritt zu geführt.

Vereinfacht dargestellt verläuft ein Verarbeitungsprozess in der Regel wie folgt. Im Bereich der dritten Trennebene 24 wird bei geschlossener Spritzgiessvorrichtung eine erste Kunststoffkomponente in eine oder mehrere Kavitäten 38 eingespritzt, so dass Teile aus der ersten Kunststoffkomponente ausgebildet werden. Gleichzeitig werden Teile aus der ersten Kunststoffkomponente, die vorgängig mit dem ersten Oberteil 12 des ersten Mittelteils 6 in zwei 90°-Schritten im Gegenuhrzeigersinn um die Drehachse 8 in den Bereich der erste Trennebene 22 transportiert wurden, im Bereich der ersten Trennebene 22 mit einer zweiten Kunststoffkomponente wirkverbunden. Im Wesentlichen zeitgleich werden im Bereich der dritten Trennebene 24 erneut Teile aus der ersten Kunststoffkomponente gebildet. Die Teile aus der ersten Trennebene 22, bestehend aus der ersten und der zweiten Kunststoffkomponente, werden anschliessend durch Drehen des ersten Oberteils 12 um 90° um die erste Drehachse 8 in den freien vorderen Bereich (gegenüber der zweiten und der dritten Plastifiziereinheit 29, 30) der Spritzgiessvorrichtung gebracht, wo sie einem weiteren Verarbeitungsschritt zugeführt werden. Im Bereich der zweiten Trennebene 23 wird eine dritte Kunststoffkomponente in Kavitäten 38 eingespritzt, so dass Teile ausgebildet werden. Im Wesentlichen zeitgleich werden Teile aus dieser dritten Kunststoffkomponenten im Bereich der vierten Trennebene 25 mit einer vierten Kunststoffkomponente wirkverbunden, indem diese in Kavitäten eingespritzt wird, die teilweise durch die Teile aus der dritten Kunststoffkomponente gebildet werden. Die Teile aus der dritten Kunststoffkomponente werden vorgängig bei geöffneter Spritzgiessvorrichtung mittels dem zweiten Oberteil 13 in den Bereich der vierten Trennebene 25 eingebracht. Eine andere Reihenfolge der Verarbeitungsschritte ist bei Bedarf möglich.

Im vorderen Bereich der Spritzgiessvorrichtung 1, gegenüber der zweiten und der dritten Plastifiziereinheiten 28, 29, werden die in den vier Trennebenen 22, 23, 24, 25 hergestellten Kunststoffteile aus der Spritzgiessvorrichtung 1 entnommen und/oder mittels einem Roboter (nicht näher dargestellt) zusammengesetzt. Im hinteren Bereich der Spritzgiessvorrichtung 1 können weitere Verarbeitungsschritte, beispielsweise das Beschriften der Kunststoffteile oder eine Kühlphase, vorgesehen sein. Bei Bedarf kann die Spritzgiessvorrichtung mehr als zwei Mittelteile 6, 7 und/oder dritte Formhälften 19 aufweisen.

In einer weiteren Ausführungsform ist die dritte Formhälfte 19 wie die beiden Mittelteile 6, 7 um eine dritte Drehachse (nicht im Detail dargestellt drehbar) drehbar angeordnet. Die dritte Formhälfte 19 weist zu diesem Zweck eine entsprechende Lagerung auf. Dies ermöglicht die Herstellung von sehr komplizierten Kunststoffteilen in einer einzigen Spritzgiessvorrichtung. Bei Bedarf besteht die Möglichkeit Mittelteile mit 2, 4 oder 6 Seiten in derselben Spritzgiessvorrichtung zu kombinieren. Weitere Verarbeitungsschritte können zum Beispiel durch Roboter realisiert werden.

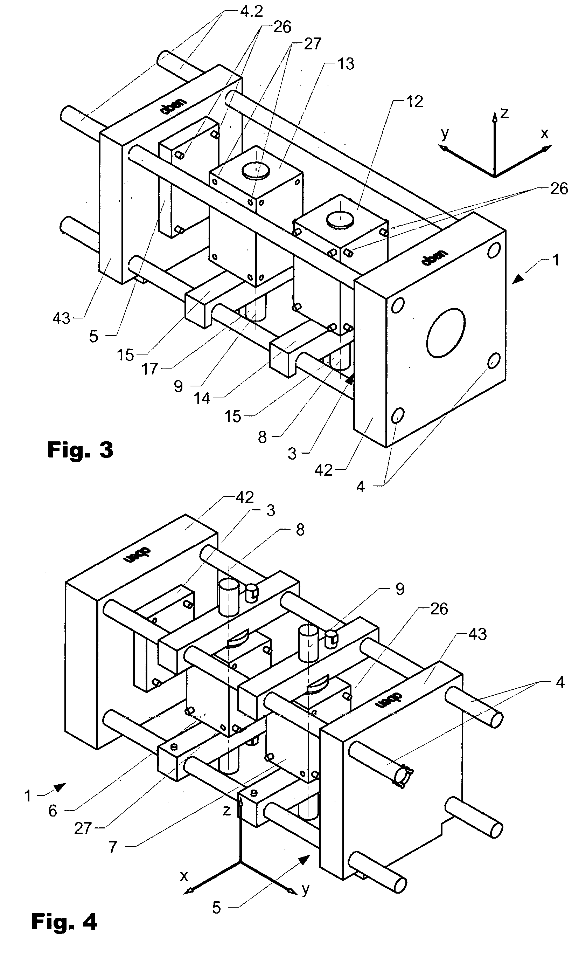

**Figur 3** zeigt eine weitere Ausführungsform einer Spritzgiessvorrichtung 1 in einer perspektivischen Darstellung von schräg oben. An einer feststehenden Formaufspannplatte 42 ist eine feststehende erste Formhälfte 3 befestigt. An einer zweiten entlang von Holmen 4.1, 4.2 einer Spritzgiessmaschine (nicht näher dargestellt) verschiebbar angeordneten Formaufspannplatte 43 ist eine zweite Formhälfte 5 angebracht. Zwischen der ersten und der zweiten Formhälfte 3, 5 sind ein erstes und ein zweites Mittelteil 6, 7 angeordnet mit einem bezüglich einer Basis 14, 15 je um eine Drehachse 8, 9 drehbaren Formträger 12, 13. Die Basen sind bei der gezeigten Ausführungsform als Traversen 14, 15 ausgebildet, welche in der gezeigten Ausführungsform mit den unteren Holmen 4.1 der Spritzgiessmaschine in Wirkverbindung stehen. Die Traversen 14, 15 sind entlang der Holmen 4 angetrieben verschiebbar. Damit die Spritzgiessvorrichtung 1 einfach ein und ausgebaut werden kann, ist die Wirkverbindung zwischen den Traversen 14, 15 und den Holmen 4.1 einfach lösbar. Bei einer weiteren Ausführungsform stehen die Traversen 14, 15 mit den oberen beiden Holmen 4.2 in Wirkverbindung und die Mittelteile 6, 7 sind hängend angeordnet. Diese Ausführungsform bietet den Vorteil, dass sie ein Wechsel der Spritzgiessvorrichtung besonders einfach möglich ist.

Die Formträger 12, 13 sind mittels Dreheinheiten 16, 17 um die Drehachsen 8, 9 drehbar mit den Traversen 14, 15 wirkverbunden. Die Dreheinheiten 16, 17 sind vorzugsweise so ausgestaltet, dass die Formträger 12, 13 endlos um die Drehachsen 8, 9 drehbar sind. Die Dreheinheiten 16, 17 weisen im Innern Kanäle auf, die für den Austausch von Betriebsstoffen und die Zufuhr von Energie zu den Formträgern 12, 13 dienen. Die Dreheinheiten 16, 17 sind mit einem Antrieb für die Drehbewegung der Formträger 12, 13 um die Drehachsen 8, 9 versehen. Als Antrieb werden vorzugsweise Elektro- oder Hydraulikmotoren verwendet. Bei Bedarf werden die Traversen 14, 15 unterhalb auf dem Maschinenbett (vgl. Figur 1) abgestützt, um das Gewicht der Mittelteile besser verteilen zu können. Zwischen den Traversen 14, 15 und den Formträgern 12, 13 können Trennstellen vorgesehen sein, die eine Trennung der Formträger 12, 13 von den Unterteilen 14, 15 ermöglichen.

**Figur 4** zeigt eine weitere Ausführungsform einer Spritgiessvorrichtung in einer perspektivischen Darstellung von schräg oben. Zwischen einer ersten feststehenden Formaufspannplatte 42 und einer entlang von Holmen 4 beweglichen zweiten Formaufspannplatte 43 ist eine erste und eine zweite Formhälfte 3, 5, sowie ein erstes und ein zweites um eine hier vertikale Achse 8, 9 drehbares Mittelteil 6, 7 angeordnet. Die Mittelteile 6, 7 weisen hier quaderförmige Formträger 12, 13 auf, die zweiseitig durch eine untere und eine obere Traverse 48, 49 gegenüber den Holmen 4 einer nicht näher dargestellten Spritzgiessvorrichtung abgestützt sind. Die Traversen 48, 49 weisen Haltemittel 50 auf, welche mit den Formträgern 12, 13 über Schnittstellen lösbar wirkverbunden sind. Die Haltemittel 50 sind relativ zueinander so verschiebbar, dass die Formträger 12, 13 aus der Spritzgiessmaschine entnommen werden können. Die Haltemittel 50 weisen normierte Schnittstellen auf, die zur Übergabe von Medien an die Formträger 12, 13 dienen. Zentriermittel, hier in Form von Zentrierzapfen 26 und Zentrierbohrungen 27 sind rotationssymmetrisch so angeordnet, dass sie beim Schliessen der Spritzgiessvorrichtung 1 in Schliessstellungen der Formträger 12, 13 in einander greifen. Die Zentriermittel 26, 27 sind so ausgestaltet, dass sie sich zur Korrektur einer gewissen Fehlstellung der Formträger 12, 13 infolge einer Drehung um die Drehachsen 8, 9 gegeneinander, respektive der Formhälften 3, 5 eignen. Im Unterschied zu aus dem Stand der Technik bekannten Wendesystemen spielt die genaue Vorzentrierung der drehbaren Teile eine besondere Rolle, da Fehlstellungen aufgrund der vielen beweglichen Teile wesentlich wahrscheinlicher sind. Aus diesem Grund sind die Zentriermittel in der Regel so ausgebildet, dass sie eine Zentrierung der Form ermöglichen bevor diese ganz geschlossen ist, respektive die empfindlichen Kavitäten ineinander eingreifen. Bei einer bevorzugten Ausführungsform weisen die Zentriermittel eine Länge auf die in etwa dem doppelten Durchmesser des Zentriermittels entspricht.

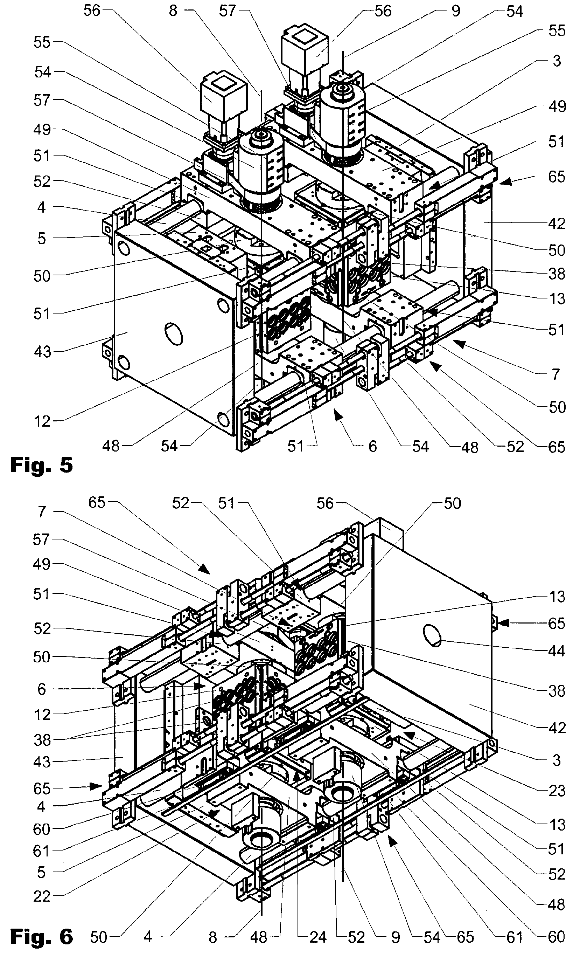

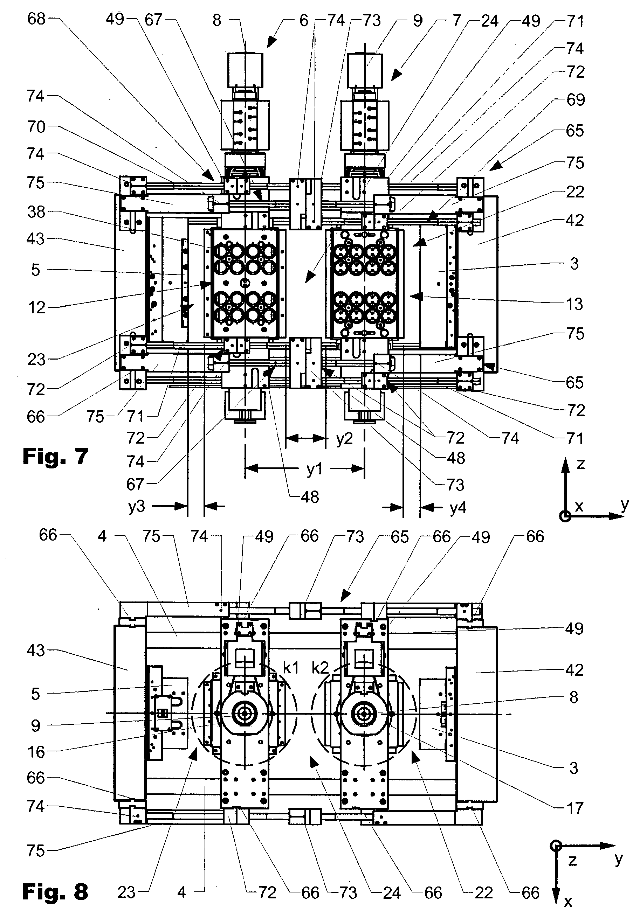

**Figur 5** und **Figur 6** zeigen eine weitere Ausführungsform einer Spritzgiessvorrichtung 1 in einer perspektivischen Darstellung von schräg oben/vorne und von schräg unten/hinten. Die **Figuren 7** und **8** zeigen die selbe Spritzgiessvorrichtung 1 frontal von vorne (Figur 7) und von oben (Figur 8). Die Nummerierung in diesen drei Figuren entsprechen einander. Nicht alle Referenzzeichen sind in allen Figuren gleichzeitig vorhanden. Die Spritzgiessvorrichtung 1 ist in geöffneter Stellung gezeigt, d.h. mit geöffneten Trennebenen 22, 23,24.

Die Spritzgiessvorrichtung 1 ist zwischen einer ersten feststehenden Formaufspannplatte 42 und einer entlang von Holmen 4 (y-Richtung) beweglichen zweiten Formaufspannplatte 43 einer Spritzgiessmaschine (nicht näher dargestellt) angeordnet. Die Spritzgiessvorrichtung 1 weist eine erste Formhälfte 3 mit Kavitätenhälften 38 auf, die mit der ersten Formaufspannplatte 42 wirkverbunden ist. Eine zweite Formhälfte 5 mit Kavitätenhälften 38 ist mit der beweglichen Formaufspannplatte 43 wirkverbunden. Zwischen der ersten und der zweiten Formhälfte 3, 5 sind ein erster und ein zweiter Mittelteil 6, 7 angeordnet, die je um eine vertikale Achse 8, 9 (z-Richtung), die im Wesentlichen senkrecht zu den Holmen 4 stehen, drehbar sind.

Jedes Mittelteil 6, 7 weist eine untere und eine obere Traverse 48, 49 (x-Richtung) auf, die über Lager 51 auf den Holmen 4 der Spritzgiessmaschine längsverschiebbar gelagert sind. In der gezeigten Ausführungsform sind die Lager 51 teilbar ausgestaltet, so dass sie zwecks Entnahme der Spritzgiessvorrichtung 1 aus der Spritzgiessmaschine einfach von den Holmen derselben gelöst werden können, indem untere Lagerschalen 52 entfernt werden. Die Traversen 48, 49 jedes Mittelteils 6, 7 weisen je ein Haltemittel 50 auf, das zur Halterung eines dazwischen angeordneten hier quaderförmigen Formträgers 12, 13 mit Kavitäten 38 dient. Die einander zugeordneten Haltemittel 50 jedes Mittelteils 6, 7 sind zueinander ausgerichtet um Drehachsen 8, 9 drehbar gegenüber den Traversen 48, 49 gelagert. Die Haltemittel 50 sind mittels um die Drehachsen 8, 9 drehbare Lagereinheiten 54 mit den ihnen zugeordneten Traversen 48, 49 wirkverbunden. Die Lagereinheiten 54 weisen bevorzugt vorgespannte Lager auf, die eine präzise Führung garantieren. Die Haltemittel 50 sind vorzugsweise über Schnellkupplungen mit den Formträgern verbunden, so dass die Formträger einfach ein- und ausgebaut werden können. Bei gewissen Ausführungsformen sind die Haltemittel 50 relativ zu einander in horizontaler und/oder vertikaler Richtung verschiebbar angeordnet, so dass die Formträger ohne Entfernen zumindest einer der Traversen ein- und ausgebaut werden können. Die Haltemittel 50 sind bei Bedarf so angeordnet, dass sie zur Feineinstellung in vertikaler und/oder horizontaler Richtung individuell in einem gewissen Bereich verstellbar sind.

Bei der gezeigten Ausführungsform dienen die Lagereinheiten 54 gleichzeitig zum Austausch von Medien mit den Formträgern 12, 13. Zu diesem Zweck weisen die Lagereinheiten 54 Anschlüsse 55 für Medienleitungen wie z.B. Wasser, Hydrauliköl, usw. auf. Weitere Schnittstellen für den Austausch von Informationen und elektrischer Energie sind bei Bedarf ebenfalls vorhanden. Der Austausch von Medien mit den Formträgern erfolgt in der Regel koaxial durch innere Hohlwellen (nicht zu erkennen) der Lagereinheiten 54 und über die Haltemittel 50. Die koaxiale Medienübergabe erfolgt vorzugsweise von der Unter- und/oder von der Oberseite her.

Der Drehantrieb der Formträger 12, 13 um die Drehachsen 8, 9 erfolgt bei der gezeigten Ausführungsform von der Oberseite her über die Lagereinheiten 54. Jedes Mittelteil 12, 13 weist einen Servomotor 56 auf, der über einen Zahnriemen 57 mit dem Formträger 12, 13 wirkverbunden ist. Bei gewissen Ausführungsformen ist der Servomotor in die Lagereinheiten 54 integriert. Über den Servomotor 56 lassen sich die Formträger 12, 13 präzise um die Drehachsen 8, 9 drehen. Infolge der koaxialen Medienübergabe besteht die Möglichkeit die Formträger endlos um ihre Drehachsen 8, 9 zu drehen.

Die Mittelteile 6, 7 der Spritzgiessvorrichtung 1 sind bei der gezeigten Ausführungsform durch Linearlager 60 auf dem Maschinenbett der Spritzgiessmaschine (nicht im Detail ersichtlich) zwischen den Holmen 4 abgestützt (vgl. Figur 6). Die Linearlager 60 dienen zur Kompensation des Gewichtes der Mittelteile 6, 7 und zur teilweisen Entlastung der Holmen 4. Sie dienen zudem als Ein- und Ausbauhilfen. Die Linearlager 60 wirken mit Schienen 61 zusammen, die auf dem Maschinenbett der Spritzgiessmaschine angeordnet sind. Bei Bedarf sind sowohl die Lager 51 als auch die Linearlager 60 in Winkel, Position und Ausrichtung mit Bezug auf die Hauptbewegungsrichtung (y-Richtung), respektive die Richtung der Holmen 4 der Spritzgiessvorrichtung einstellbar.

Bei geschlossener Spritzgiessvorrichtung 1 werden im Bereich der ersten und der zweiten Trennebene 22, 23 Teile durch Einspritzen von Kunststoff in Kavitäten 38 hergestellt. Das Einspritzen in die Kavitäten 38 im Bereich der ersten Trennebene 22 erfolgt in der Regel durch eine Einspritzöffnung 44 in der feststehenden Formaufspannplatte 42. Das Einspritzen von Kunststoff in Kavitäten 38 der zweiten Trennebene 23 erfolgt vorzugsweise durch ein seitlich neben oder oberhalb der Spritzgiessvorrichtung 1 angeordnetes Einspritzaggregat das entweder nur temporär während dem Einspritzvorgang mit der Spritzgiessvorrichtung wirkverbunden ist oder kontinuierlich in Verbindung steht und mitbewegt wird. Das Einspritzen erfolgt entweder direkt oder via der zweiten, beweglichen Formaufspannplatte 43. Im Bereich der dritten Trennebene 24 werden vorgängig in der ersten und zweiten Trennebene 22, 23 gefertigte Teile (nicht näher dargestellt) miteinander wirkverbunden. Die Teile bleiben zu diesem Zweck beim Öffnen der ersten und der zweiten Trennebene 22, 23 an den formträgerseitigen 12, 13 Kavitätenhälften 38 haften und werden durch Drehen der Formträger 12, 13 von der ersten, respektive der zweiten Trennebene 22, 23 in den Bereich der dritten Trennebene 24 gebracht. Die Formträger 12, 13 werden dazu in der Regel um 90° oder um 180° um die Drehachsen 8, 9 rotiert. Im Fall von 90°-Schritten werden die Teile in zwei Schritten in den Bereich der dritten Trennebene 24 transportiert, so dass sie während dem Zwischenschritt seitlich an der Spritzgiessvorrichtung angeordnet sind. In dieser Position können die Teile entweder auskühlen oder einem weiteren Bearbeitungsschritt durch eine externe oder eine in die Spritzgiessvorrichtung integrierte Vorrichtung unterzogen werden.

Die Spritzgiessvorrichtung 1 weist Koordinationsmittel 65 auf, welche die Bewegung der beweglichen Teile beim Öffnen und beim Schliessen der Spritzgiessvorrichtung 1 koordinieren. Die gezeigte Ausführungsform weist vier Koordinationsmittel 65 auf, wovon je zwei mit der feststehenden Formaufspannplatte 42, den oberen beiden Traversen 49 und der beweglichen Formaufspannplatte 43 und je zwei mit der feststehenden Formaufspannplatte 42, den unteren beiden Traversen 48 und der beweglichen Formaufspannplatte 43 wirkverbunden sind. Die Koordinationsmittel 65 sind als Module ausgebildet die im Wesentlichen auf der Höhe der Holmen 4 angebracht sind und ein seitliches Verkanten der Traversen 48, 49 beim Öffnen und beim Schliessen der Spritzgiessvorrichtung 1 verhindern. Die Koordinationsmittel 65 sind über lösbare Verbindungen 66 an den Formaufspannplatten 42, 43 und den Traversen 48, 49 befestigt. Durch Entfernen der Koordinationsmittel 65 wird die Koordination zwischen den beweglichen Teilen der Spritzgiessvorrichtung 1 aufgehoben, so dass die Traversen 48, 49 z.B. beim Entnehmen oder Einsetzen der Formhälften 3, 5 oder der Formträger 12, 13 unabhängig von einander entlang der Holmen 4 verschiebbar sind.

Jedes der vier Koordinationsmittel 65 der gezeigten Ausführungsform weist eine erste, eine zweite und eine dritte Spindel 67, 68, 69 auf, die miteinander in Wirkverbindung stehen. Jede der Spindeln 67, 68, 69 ist zweigeteilt und weist in der ersten Hälfte ein erstes Gewinde 70 mit einer positiven Steigung und in der zweiten Hälfte ein zweites Gewinde 71 mit einer negativen, der ersten Seite entgegen gesetzten Steigung auf. In der Mitte sind die Spindeln über drehfreie Axiallager 72 mit einem Spindelblock 73 (erste Spindel) oder den Traversen 48, 49 des ersten, respektive des zweiten Mittelteils 6, 7 (zweite, bzw. dritte Spindel) wirkverbunden. Die Gewinde der ersten Spindel 67 stehen mit entsprechenden feststehenden Spindelmuttern 74 in Wirkverbindung, die an horizontal angeordneten Trägern 75 befestigt sind. Die Träger 75 sind wiederum an der ersten, respektive der zweiten Formaufspannplatte 42, 43 starr befestigt. Wird nun die zweite Formaufspannplatte 43 relativ zur ersten Formaufspannplatte 42 bewegt beginnt sich die erste Spindel 67 infolge der beidseitigen gegenläufigen Gewinde zu drehen. Die Drehgeschwindigkeit ist dabei abhängig von der Steigung der Aussengewinde 70, 71, respektive der Innengewinde der Spindelmuttern 74. Bei der gezeigten Ausführungsform weisen die beiden Gewinde 70, 71 dieselbe, gegenläufige Gewindesteigung auf so dass ein gleichmässiges Einschrauben der ersten Spindel 67 in die Spindelmutter 74 ergibt. Dadurch befindet sich der Spindelblock 73 beim Öffnen, respektive Schliessen der Spritzgiessvorrichtung 1 (mit Bezugnahme auf die zurückgelegte Strecke) immer in der Mitte zwischen der ersten, respektive der zweiten Formhälfte 3, 5. Bei der gezeigten Ausführungsform bewegt sich der Mittelblock mit der halben Geschwindigkeit mit Bezug auf die relative Geschwindigkeit zwischen der feststehenden ersten Formaufspannplatte 42 und der beweglichen zweiten Formaufspannplatte 43.

Die zwischen der ersten Formaufspannplatte 42 und dem Spindelblock 73 angeordnete zweite Spindel 68, respektive die zwischen dem Spindelblock 73 und der zweiten Formaufspannplatte 43 angeordnete dritte Spindel 69 weisen im Wesentlichen denselben Aufbau auf wie die erste Spindel 67. Die zweite, respektive die dritte Spindel 68, 69 sind im Bereich ihrer Mitte über ein Axiallager 72 mit den Traversen 48, 49 wirkverbunden. Die Relativgeschwindigkeit der Traversen des ersten Mittelteils 6 wird daher durch die relative Geschwindigkeit zwischen der feststehenden ersten Formaufspannplatte 42 und dem Spindelblock 73 und die Geschwindigkeit der Traversen 48, 49 des zweiten Mittelteils 7 durch die Relativgeschwindigkeit zwischen dem Spindelblock 73 und der zweiten Formaufspannplatte 43 bestimmt. Durch den beschriebenen Koordinationsmechanismus 65 wird erreicht, dass das erste Mittelteil 6 beim Öffnen und beim Schliessen der Spritzgiessvorrichtung 1 mit einem Viertel und das zweiten Mittelteil 7 mit drei Vierteln der Geschwindigkeit der zweiten Formaufspannplatte 43 bewegt wird, so dass der Abstand y2 zwischen den beiden Mittelteilen 6, 7, respektive den beiden Formträgern 12, 13 im Bereich der dritten Trennebene 24 im Wesentlichen doppelt so gross ist wie die Abstände y3 und y4 zwischen der ersten Formhälfte 3 und dem ersten Formträger 12, respektive dem zweiten Formträger 13 und der zweiten Formhälfte 5 im Bereich der ersten und der zweiten Trennebene 22, 23. Durch diese Bewegung der Mittelteile 6, 7 mit Bezug zu den Formaufspannplatten 42 43 wird erreicht, dass die Formträger 12, 13 viel früher um die Drehachsen 8, 9 bewegt werden können ohne dass sie miteinander kollidieren als wenn die Spritzgiessvorrichtung 1 gleichmässig geöffnet würde so dass die Abstände y2, y3, y4 gleich gross wären.

Durch die Wahl der Steigungen der Spindeln 67, 68, 69 besteht die Möglichkeit den Abstand y1 zwischen den Drehachsen 8, 9, respektive die Abstände y2, y3, y4 weitgehend frei einzustellen. Durch die Wahl unterschiedlicher Steigungen der beiden zugeordneten Gewinde einer Spindel kann das Verhältnis so beeinflusst werden, dass z.B. das im Bereich der Spindelmitte mitgeführte Teil sich mit einer definierten Geschwindigkeit gegenüber der zweiten Formaufspannplatte 43 mitbewegt. Die beschriebenen Koordinationsmittel 65 können in geeigneter Weise auch mit Spritzgiessvorrichtungen 1 verwendet werden, bei denen die Mittelteile 6, 7 eine andere Lagerung/Abstützung gegenüber den Holmen aufweisen. Der Mittelblock 73 kann zur Führung einer dritten Formhälfte, wie z.B. in Figur 2 gezeigt, verwendet werden.

Bei der Entnahme der beschriebenen Spritzgiessvorrichtung 1 aus einer normierten Spritzgiessmaschine 1 werden die vier Koordinationsmittel 65 entfernt, so dass die Mittelteile relativ zueinander frei bewegbar sind. Bei geöffneter Spritzgiessvorrichtung werden die Lagerschalen 52 der Lager 51 der oberen Traversen 49 gelöst. Nach dem Lösen der unteren Haltemittel 50 und aller Medienzuführleitungen und Kabelverbindungen können die Formträger 12, 13 zusammen mit den oberen Traversen 49 entnommen werden. Je nach Ausführungsform werden zuerst nur die oberen Haltemittel 50 gelöst und zuerst nur die oberen Traversen 49 und dann erst die Formträger 12, 13 entnommen. Anschliessend können die Lager 50 der unteren Traversen geöffnet werden und die unteren Traversen 48 entnommen werden. Bevorzugt ist ein Koordinationsmechanismus der die zurückgelegten Wege der bewegten Teile abhängig von der Trennebene so aufeinander abstimmt, dass die Mittelteile effizient und bei Bedarf gleichzeitig gedreht werden können (vgl. Figur 8, hier schematisch angedeutet durch Kreise k1 und k2 auf denen die äusseren Punkte der Formträger 12, 13 drehen).

Im Bereich der dritten Trennebene 24 werden die Teile aus der ersten und der zweiten Trennebene 22, 23 miteinander wirkverbunden. In einer bevorzugten Ausführungsform erfolgt dies durch Umspritzen mit einer Materialkomponente, die zum Beispiel seitlich oder von oben in weitere Kavitäten (nicht näher ersichtlich) eingespritzt wird. In einer bevorzugten Ausführungsform ergeben sich diese weiteren Kavitäten entweder durch ein Zusammenwirken der Kavitäten 38 des ersten und des zweiten Formträgers 12, 13 oder alternativ oder in Ergänzung durch Verschieben eines Teils der Spritzgiessform, z.B. eines Schiebers (nicht im Detail ersichtlich), in einem Formträger 12, 13. Das Einspritzen in die weiteren Kavitäten erfolgt vorzugsweise durch ein separates Einspritzaggregat der beschriebenen Form.

Alternativ oder in Ergänzung werden die Teile der ersten und der zweiten Trennebene 22, 23 im Bereich der dritten Trennebene 24 durch eine Relativbewegung mechanisch zusammengefügt, respektive direkt oder indirekt wirkverbunden. In einer ersten Ausführungsform erfolgt dies durch die Schliessbewegung der Spritzgiessvorrichtung 1, was aber unter Umständen den Nachteil nach sich zieht, dass die Spritzgiessvorrichtung nicht mit der maximal möglichen Geschwindigkeit geschlossen werden kann, respektive die Gefahr besteht, dass die Teile und/oder die Spritzgiessform beschädigt werden. Ein weiteres Problem besteht darin, dass die Reiativbewegung in dieser Variante aufgrund der hohen Masse der bewegten Teile nur sehr schwer kontrollierbar und justierbar ist. In einer weiteren Ausführungsform ist eine separate Wirkverbindungsvorrichtung vorhanden, die zum Zusammenfügen der Teile geeignet ist. In einer bevorzugten Ausführungsform ist zumindest einer der Formträger 12, 13 mit einer separaten Wirkverbindungsvorrichtung ausgestattet, die losgelöst von der Schliessbewegung der Spritzgiessvorrichtung 1 funktionsfähig ist. Die Wirkverbindungsvorrichtung ist in der Regel zumindest teilweise im Innern angeordnet und befindet sich in Wirkverbindung mit Teilen die sich in den Kavitätenhälften 38 des ersten und/oder des zweiten Formträgers 12, 13 angeordnet sind. Bei Bedarf weist die Wirkverbindungsvorrichtung einen Aufbau auf, der eine Justierung der Kraft und/oder des Weges pro Kavität oder Gruppe von Kavitäten ermöglicht. Die Wirkverbindungsvorrichtung ist so ausgestaltet, dass die miteinander zu verbindenden Teile der entsprechenden Kavitäten 38 bei geschlossener Spritzgiessvorrichtung 1 zusammengefügt werden können. Die Wirkverbindungsvorrichtung ist vorzugsweise hydraulisch, mechanisch und/oder elektrisch angetrieben und kann bereichsweise als Teil einer Kavität ausgebildet sein. In einer Ausführungsform ist die Wirkverbindungsvorrichtung als Wirkverbindungsschieber ausgestaltet, der ein oder mehrteilig ausgebildet ist. Bei Bedarf kann jede Kavität 38 mit einer separaten Wirkverbindungsvorrichtung ausgestaltet sein. Die Wirkverbindungsvorrichtung kann so ausgestaltet sein, dass sie nur bei geschlossener Spritzgiessvorrichtung zum Einsatz kommt. Alternativ oder in Ergänzung kann die Wirkverbindungsvorrichtung so ausgestaltet sein, dass eine Überlagerung oder Ausnutzung der Schliessbewegung der Spritzgiessvorrichtung 1 für das Fügen der zu verbindenden Teile erfolgt.

Je nach Anwendungsgebiet werden die zu verbindenden Teile mittels der Wirkverbindungsvorrichtung in einem Schritt oder in mehreren Einzelschritten zusammengefügt. Beispielsweise besteht die Möglichkeit zumindest die Teile einer Seite in eine bestimmte Position zu bringen, respektive freizustellen, bevor der eigentliche Wirkverbindungsvorgang erfolgt. Falls erforderlich können die Teile nach dem in Aktion Treten der Wirkverbindungsvorrichtung einem weiteren Verarbeitungsschritt unterzogen, z.B. indem sie zumindest bereichsweise umspritzt oder verschweisst werden.

Einer der Vorteile einer separaten Wirkverbindungsvorrichtung besteht darin, dass die miteinander zu verbindenden Teile sehr viel präziser und schonender zu verarbeiten sind. Insbesondere bei Spritzgiessvorrichtungen die in einer Trennebene eine Vielzahl von Kavitäten aufweisen, ist ein Zusammenfügen nur durch die Schliessbewegung der Spritzgiessvorrichtung meist ungenügend.

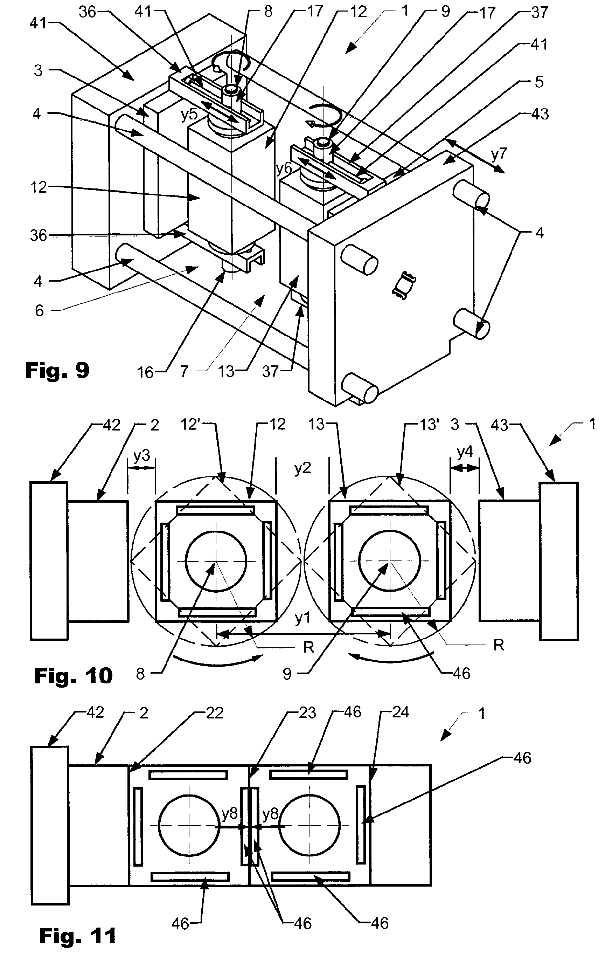

**Figur 9** zeigt eine erfindungsgemässe Ausführungsform einer Spritzgiessvorrichtung 1 in einer perspektivischen Darstellung von schräg oben. An einer feststehenden Formaufspannplatte 42 ist eine feststehende erste Formhälfte 3 befestigt. An einer zweiten entlang von Holmen 4 einer Spritzgiessmaschine (nicht näher dargestellt) verschiebbar angeordneten Formaufspannplatte 43 ist eine zweite Formhälfte 5 angebracht. Zwischen der ersten und der zweiten Formhälfte 3, 5 sind ein erstes und ein zweites Mittelteil 6, 7 angeordnet mit je einem um eine erste, resp. zweite Drehachse 8, 9 drehbaren Formträger 12, 13.

Das erste und das zweiten Mittelteil 6, 7 sind hier je mittels einem unteren und einem oberen Kragarmen 36, 37 gegenüber den Formhälften 2, 3, resp. den Formaufspannplatten 42, 43 gelagert. Die Kragarme 36, 37 dienen als Basis und als Linearführung. Die Kragarme 36 des ersten Mittelteils 6 sind mit der ersten Formhälfte 2 feststehend angeordnet. Im Unterschied dazu sind die Kragarme 37, welche zur Halterung des zweiten Mittelteils 3 dienen, mit der zweiten Formhälfte 5, resp. der zweiten Formaufspannplatte 3, wirkverbunden und bewegen sich mit diesen mit.

Die Formträger 12, 13 sind mittels Dreheinheiten 16, 17 um die Drehachsen 8, 9 drehbar mit den Kragarmen 36, 37 wirkverbunden. Die Dreheinheiten 16, 17 sind vorzugsweise so ausgestaltet, dass die Formträger 12, 13 endlos um die Drehachsen 8, 9 drehbar sind und weisen im Innern Kanäle auf, die für den Austausch von Betriebsstoffen und die Zufuhr von Energie zu den Formträgern 12, 13 dienen. Die Dreheinheiten 16, 17 sind mit einem Antrieb für die Drehbewegung der Formträger 12, 13 um die Drehachsen 8, 9 versehen. Als Antrieb werden vorzugsweise Elektro- oder Hydraulikmotoren verwendet. Die Kragarme sind vorzugsweise so ausgebildet, dass sich die Mittelteile unabhängig von einander mit Bezug auf die erste, respektive die zweite Formhälfte bewegen lassen.

Bei der gezeigten Ausführungsform sind die Mittelteile 2, 3 gegenüber den Kragarmen 36, 37 in Längsrichtung verschiebbar angeordnet (schematisch dargestellt durch Pfeile y5, y7). Dabei werden sie mittels Linearantrieben 41 entlang der Kragarme 36, 37 verschoben und positioniert. Die Bewegung ist während der Produktion auf die Bewegung (Pfeil y7) der zweiten Formhälfte so abgestimmt ist, dass keine Zykluszeit verloren geht und ein möglichst zeitsparendes Drehen der Mittelteile möglich ist. Die Trennebenen werden zwecks effizientem Drehen der Formträger 12, 13 um die Drehachsen 8, 9 vorzugsweise ungleichmässig geöffnet. Bei Bedarf kann das Gewicht der Mittelteile durch zusätzliches Abstützten, z.B. auf dem Maschinenbett der Spritzgiessmaschine (nicht näher dargestellt) oder über die Holmen 4, kompensiert werden. Die Zentrierung und Ausrichtung der einzelnen Teile erfolgt in der beschriebenen Weise. Als Linearantriebe sind z. B. Spindel-, Zahnriemen-, Zahnstangen- oder Hydraulikzylinder denkbar. Passive Lösungen können eine mechanische Kopplung mit der beweglichen Formhälfte 3 aufweisen. Die Kragarme sind als Linearführungen ausgebildet oder mit solchen wirkverbunden. Die Formträger 12, 13 weisen im Bereich ihrer Seitenflächen korrespondierende Kavitäten (nicht näher dargestellt) auf, in die bei geschlossener Spritzgiessvorrichtung 1 Kunststoff eingespritzt wird. Die Formträger 12, 13 sind mit Wirkverbindungsmittein ausgestattet, die bei geschlossener Spritzgiessvorrichtung zur Montage von Spritzgiessteilen in der mittleren Schliessebene dienen. Ein Wirkverbindungsmittel ist einer oder mehreren Kavitäten zugeordnet und lässt sich bei Bedarf individuell ansteuern. Die gezeigte Ausführungsform eignet sich u. a. für kleinere Vorrichtungen.

Die **Figuren 10** und **11** zeigen schematisch eine Spritzgiessvorrichtung 1 in geöffneter (Figur 10) und geschlossener Position (Figur 11). Dargestellt sind die feststehende und die beweglichen Formaufspannplatte 42, 43 einer Spritzgiessmaschine (nicht näher zu erkennen) an denen eine feststehende erste und eine bewegliche zweite Formhälfte 2, 3 angebracht sind. Zwischen der ersten und der zweiten Formhälfte 2, 3 sind ein erster und ein zweiter Formträger zu erkennen, die um hier senkrecht zur Zeichenebene stehende Drehachsen 8, 9 drehbar angeordnet sind.

In Figur 10 ist dargestellt in welcher Position die Formhälften 2, 3 vorzugsweise um die Drehachsen 8, 9 gedreht werden. Die Abstände y1, y2, y3 und y4 sind durch die Drehradien R gegeben, welche den äusserten Punkt der Formträger 12, 13 andeuten. Die Diagonalposition in der die Formträger 12, 13 die maximale Ausdehnung einnehmen ist durch Quadrate 12', 13' angedeutet. Bei der gezeigten Ausführungsform erfolgt die Drehung am effizientesten wenn die Abstände y3 und y4 in etwa halb so gross sind wie der Abstand y2 und die Abstände y3 und y4 so gewählt sind, dass die Drehradien R nicht die erste, resp. die zweite Formhälfte 2 ,3 berühren.

In den Figuren 10 und 11 sind Wirkverbindungsmittel 46 dargestellt, die bei geschlossener Spritzgiessvorrichtung 1 zur Montage von Teilen im Bereich der mittleren (zweiten) Trennebene 23 dienen. Im Wesentlichen gleichzeitig werden in der ersten und der dritten Trennebene 22, 24 weitere Kunststoffteile hergestellt.

In der gezeigten Ausführungsform weisen beide Formträger 12, 13 Wirkverbindungsmittel 46 auf, welche zum Zusammenfügen von Teilen aus zwei einander zugeordneten Kavitäten gleichzeitig dienen. Je nach Anwendungsgebiet besteht die Möglichkeit nur einen Formträger 12, 13 oder beide alternierend mit Wirkverbindungsmitteln 46 auszustatten, so dass in der mittleren Trennebene 23 das Zusammenfügen von Teilen nur in einer Richtung erfolgt. Bei Bedarf können auch mehrere Wirkverbindungsmittel vorgesehen sein, die sequentiell oder überlagert eine mehrstufige Bearbeitung vornehmen. Bei Bedarf sind Bearbeitungsschritte und/oder Manipulationen bei geöffneter Vorrichtung möglich. In Figur 11 sind die Wirkverbindungsmittel 46 der mittleren Trennebene zusammengefahren (vgl. Pfeile y8) dargestellt, was vereinfacht einen Wirkverbindungsprozess darstellt. Einer der Vorteil der gezeigten Vorrichtung besteht darin, dass die Wirkverbindung von Teilen von der Hauptmaschinenbewegung der Spritzgiessmaschinen entkoppelt werden kann.

Bei den Wirkverbindungsmitteln handelt es sich vorzugsweise um einzelne oder mehrere einzeln oder gemeinsam ansteuerbare Schieber, Rechen oder Umlegemittel oder einer Kombination davon die gleichzeitig oder sequentiell zum Einsatz kommen. Die Wirkverbindungsmitteln werden je nach Funktion parallel oder senkrecht zur Hauptbewegungsrichtung der Spritzgiessmaschine bewegt oder rotiert. Andere Bewegungsformen sind möglich. Die Wirkverbindungsmittel werden vorzugsweise über Hydraulik oder Elektromotoren, oder mittels einer mechanischen Kopplung mit anderen Teilen der Vorrichtung angetrieben. Komplexe Bewegungen können z.B. mittels Evolventen realisiert werden. Bei Bedarf werden die Bewegungen und die Kräfte mittels Sensoren pro Kavität oder einer Gruppe von Kavitäten überwacht. Bei Bedarf dienen die Wirkverbindungsmittel zum Auswerfen der fertigen Teile bei geöffneter Spritzgiessvorrichtung.

Für den Fachmann ergeben sich weitere Ausführungsformen durch Kombination der Merkmale der beschriebenen Vorrichtungen.

## Patentansprüche

1. Spritzgiessvorrichtung (1) mit einer feststehenden ersten Formhälfte (3), einer in Richtung (y) von Holmen (4) einer Spritzgiessmaschine (2) verschiebbar angeordneten zweiten Formhälfte (5), einem ersten und einem zweiten zwischen den Formhälften (3, 5) angeordneten und in Richtung der Holmen (4) verschiebbaren Mittelteil (6, 7) mit je einem bezüglich einer Halterung (10) um eine Drehachse (8, 9) drehbaren Formträger (12, 13) **dadurch gekennzeichnet, dass** das erste und das zweite Mittelteil (6, 7) je mittels einem unteren und einem oberen Kragarm (36, 37), die als Basis und als Linearführung dienen, gegenüber den Formhälften (3, 5) gelagert sind.

2. Spritzgiessvorrichtung (1) gemäss Patentanspruch 1, **dadurch gekennzeichnet, dass** die Formträger (12, 13) mittels Dreheinheiten (16, 17) um die Drehachsen (8, 9) drehbar mit den Kragarmen (36, 37) wirkverbunden sind.

3. Spritzgiessvorrichtung (1) gemäss einem der vorangehenden Patentansprüche, **dadurch gekennzeichnet, dass** die Dreheinheiten (16, 17) so ausgestaltet, dass die Formträger (12, 13) endlos um die Drehachsen 8, 9 drehbar sind.

4. Spritzgiessvorrichtung (1) gemäss einem der vorangehenden Patentansprüche, **dadurch gekennzeichnet, dass** die Dreheinheiten (16, 17) im Innern Kanäle aufweisen, die für den Austausch von Betriebsstoffen und die Zufuhr von Energie zu den Formträgern (12, 13) dienen.

5. Spritzgiessvorrichtung (1) gemäss einem der vorangehenden Patentansprüche, **dadurch gekennzeichnet, dass** die Mittelteile (2, 3) gegenüber den Kragarmen (36, 37) in Längsrichtung verschiebbar angeordnet sind.

6. Spritzgiessvorrichtung (1) gemäss einem der vorangehenden Patentansprüche, **dadurch gekennzeichnet, dass** die Mittelteile (2, 3) zusätzlich auf dem Maschinenbett einer Spritzgiessmaschine oder Holmen (4) abgestützt sind.

7. Spritzgiessvorrichtung (1) gemäss einem der vorangehenden Patentansprüche, **dadurch gekennzeichnet, dass** die Formträger (12, 13) mit Wirkverbindungsmitteln ausgestattet sind, die bei geschlossener Spritzgiessvorrichtung zur Montage von Spritzgiessteilen in der mittleren Trennebene dienen.

8. Spritzgiessvorrichtung (1) gemäss Patentanspruch 7, **dadurch gekennzeichnet, dass** ein Wirkverbindungsmittel einer oder mehreren Kavitäten zugeordnet ist.

9. Spritzgiessvorrichtung (1) gemäss Patentanspruch 7 oder 8, **dadurch gekennzeichnet, dass** sich die Wirkverbindungsmittel individuell ansteuern lassen.

10. Spritzgiessvorrichtung (1) gemäss einem der vorangehenden Patentansprüche, **dadurch gekennzeichnet, dass** die Kragarme (36, 37) so ausgebildet sind, dass sich die Mittelteile unabhängig von einander mit Bezug auf die erste, respektive die zweite Formhälfte (3, 5) bewegen lassen.

## Claims

1. An injection-molding device (1) having a fixed first mold half (3), a second mold half (5) which is arranged so that it can be slid in the direction (y) of tie bars (4) of an injection-molding machine (2), a first and a second center part (6, 7), which are arranged between the mold halves (3, 5) and can be slid in the direction of the tie bars (4), each having a mold carrier (12, 13) which can be rotated with respect to a holder (10) about an axis of rotation (8, 9), **characterized in that** the first and the second center part (6, 7) are each mounted opposite the mold halves (3, 5) by means of a lower and an upper cantilever arm (36, 37), which serve as a base and as a linear guide.

2. The injection-molding device (1) as claimed in patent claim 1, **characterized in that** the mold carriers (12, 13) are operatively connected to the cantilever arms (36, 37) by means of rotating units (16, 17) so that they can rotate about the axes of rotation (8, 9).

3. The injection-molding device (1) as claimed in one of the preceding patent claims, **characterized in that** the rotating units (16, 17) are designed such that the mold carriers (12, 13) can be endlessly rotated about the axes of rotation (8, 9).

4. The injection-molding device (1) as claimed in one of the preceding patent claims, **characterized in that** the rotating units (16, 17) have internal channels, which are used for exchanging operating media and for feeding energy to the mold carriers (12, 13).

5. The injection-molding device (1) as claimed in one of the preceding patent claims, **characterized in that** the center parts (2, 3) are arranged so that they can be slid in the longitudinal direction relative to the cantilever arms (36, 37).

6. The injection-molding device (1) as claimed in one of the preceding patent claims, **characterized in that** the center parts (2, 3) are additionally supported on the machine bed of an injection-molding machine or tie bars (4).

7. The injection-molding device (1) as claimed in one of the preceding patent claims, **characterized in that** the mold carriers (12, 13) are equipped with operative connecting means which are used for assembling injection-molded parts in the central parting plane when the injection-molding device is closed.

8. The injection-molding device (1) as claimed in patent claim 7, **characterized in that** an operative connecting means is associated with one or more cavities.

9. The injection-molding device (1) as claimed in patent claim 7 or 8, **characterized in that** the operative connecting means can be controlled individually.

10. The injection-molding device (1) as claimed in one of the preceding patent claims, **characterized in that** the cantilever arms (36, 37) are designed such that the center parts can be moved independently of one another with reference to the first and second mold halves (3, 5) respectively.

## Revendications

1. Dispositif de moulage par injection (1) comportant un premier demi-moule fixe (3), un second demi-moule (5) mobile en translation dans la direction (y) de barres (4) d'une machine à mouler par injection (2), des première et seconde parties centrales (6, 7) disposées entre les demi-moules (3, 5), mobiles en translation dans la direction des barres (4) et comportant chacune un porte-moule (12, 13) qui peut tourner par rapport à une fixation (10) autour d'un axe de rotation (8, 9), **caractérisé en ce que** les première et seconde parties centrales (6, 7) sont montées rotatives par rapport aux demi-moules (3, 5) chacune au moyen de bras en porte-à-faux inférieur et supérieur (36, 37) qui servent de base et de guide linéaire.

2. Dispositif de moulage par injection (1)) selon la revendication 1, **caractérisé en ce que** les porte-moules (12, 13) sont interconnectés en façon opérationnelles aux bras en porte-à-faux (36, 37) de façon à pouvoir tourner autour des axes de rotation (8, 9) au moyen d'unités de rotation (16, 17).

3. Dispositif de moulage par injection (1) selon l'une des revendications précédentes, **caractérisé en ce que** les unités de rotation (16, 17) sont construites de telle sorte que les porte-moules (12, 13) peuvent tourner indéfiniment autour des axes de rotation (8, 9).

4. Dispositif de moulage par injection (1) selon l'une des revendications précédentes, **caractérisé en ce que** les unités de rotation (16, 17) présentent intérieurement des canaux qui servent pour l'échange de matières et pour l'amenée d'énergie aux porte-moules (12, 13).

5. Dispositif de moulage par injection (1) selon l'une des revendications précédentes, **caractérisé en ce que** les parties centrales (2, 3) sont montées mobiles en translation dans la direction longitudinale par rapport aux bras en porte-à-faux (36, 37).

6. Dispositif de moulage par injection (1) selon l'une des revendications précédentes, **caractérisé en ce que** les parties centrales (2, 3) sont en supplément appuyées sur le banc d'une machine à mouler par injection ou sur des barres (4).

7. Dispositif de moulage par injection (1) selon l'une des revendications précédentes, **caractérisé en ce que** les porte-moules (12, 13) sont équipés de moyens de connexion opérationnelle qui, lorsque le dispositif de moulage par injection est fermé, servent pour le montage de pièces moulées par injection dans le plan de joint central.

8. Dispositif de moulage par injection (1) selon la revendication 7, **caractérisé en ce qu'**un moyen de connexion opérationnelle est associé à une ou à plusieurs empreintes.

9. Dispositif de moulage par injection (1) selon l'une des revendications 7 ou 8, **caractérisé en ce que** les moyens de connexion opérationnelle sont pilotés individuellement.

10. Dispositif de moulage par injection selon l'une des revendications précédentes, **caractérisé en ce que** les bras en porte-à-faux (36, 37) sont constitués de telle sorte que les parties centrales peuvent se déplacer indépendamment l'une de l'autre, respectivement par rapport au premier demi-moule (3) et par rapport au second demi-moule (5).
